(19) Europäisches Patentamt
European Patent Office
Office européen des brevets

(11) **EP 2 089 639 B1**

(12) **EUROPÄISCHE PATENTSCHRIFT**

(45) Veröffentlichungstag und Bekanntmachung des Hinweises auf die Patenterteilung:
**26.01.2011 Patentblatt 2011/04**

(21) Anmeldenummer: **07847631.4**

(22) Anmeldetag: **03.12.2007**

(51) Int Cl.:
*F16H 3/00* *(2006.01)*    *F16H 3/72* *(2006.01)*
*F16H 3/097* *(2006.01)*    *B60K 6/365* *(2007.10)*
*B60W 20/00* *(2006.01)*    *F16H 61/688* *(2006.01)*

(86) Internationale Anmeldenummer:
**PCT/EP2007/063118**

(87) Internationale Veröffentlichungsnummer:
**WO 2008/074614 (26.06.2008 Gazette 2008/26)**

(54) **HYBRIDANTRIEBSSTRANG EINES KRAFTFAHRZEUGS**

HYBRID DRIVE TRAIN OF A MOTOR VEHICLE

CHAÎNE CINÉMATIQUE HYBRIDE D'UN VÉHICULE AUTOMOBILE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **16.12.2006 DE 102006059591**

(43) Veröffentlichungstag der Anmeldung:
**19.08.2009 Patentblatt 2009/34**

(73) Patentinhaber: **ZF Friedrichshafen AG**
**88038 Friedrichshafen (DE)**

(72) Erfinder: **BACHMANN, Max**
**88339 Bad Waldsee (DE)**

(56) Entgegenhaltungen:
**EP-A- 0 845 618      DE-A1- 19 849 156**
**DE-C1- 19 940 288      US-A1- 2003 045 389**

EP 2 089 639 B1

**Beschreibung**

Die Erfindung betrifft einen Hybridantriebsstrang eines Kraftfahrzeugs, der einen Verbrennungsmotor mit einer Triebwelle, eine als Motor und als Generator betreibbare Elektromaschine mit einem Rotor, ein mehrstufiges Schaltgetriebe mit zwei Eingangswellen und einer Ausgangswelle sowie ein Differenzialgetriebe umfasst, wobei zumindest eine der Eingangswellen über eine zugeordnete Trennkupplung mit der Triebwelle verbindbar ist, beide Eingangswellen über wechselweise zugeordnete Gangradsätze unterschiedlicher Übersetzung und jeweils eine zugeordnete Gangkupplung selektiv mit der Ausgangswelle verbindbar sind, und das Differenzialgetriebe als ein einfaches Planetengetriebe ausgebildet ist, das koaxial über der ersten Eingangswelle angeordnet ist, dessen Hohlrad drehfest mit der einen Eingangswelle verbunden ist, dessen Planetenträger drehfest mit der anderen Eingangswelle verbunden ist, und dessen Sonnenrad mit dem Rotor in Triebverbindung steht. Des Weiteren betrifft die Erfindung ein Verfahren zur Steuerung eines derartigen Hybridantriebsstrangs.

Ein Hybridantriebsstrang eines Kraftfahrzeugs mit einer parallelwirksamen Anordnung eines Verbrennungsmotors und einer Elektromaschine kann in Verbindung mit einem antriebstechnisch nachgeordneten mehrstufigen Schaltgetriebe geometrisch einfach derart aufgebaut sein, dass die Elektromaschine koaxial auf der Eingangswelle des Schaltgetriebes angeordnet ist, der Rotor der Elektromaschine drehfest mit der Eingangswelle des Schaltgetriebes verbunden ist, und die Triebwelle des Verbrennungsmotors über eine steuerbare, also aus- und einrückbare Trennkupplung mit der Eingangswelle des Schaltgetriebes verbindbar ist.

Die Elektromaschine kann in diesem Fall während des Fahrbetriebs wahlweise kraftlos geschaltet werden, als Generator zum Laden eines elektrischen Energiespeichers verwendet oder als Elektromotor zum Antrieb des Kraftfahrzeugs eingesetzt werden. Im Motorbetrieb kann die Elektromaschine bei geschlossener Trennkupplung, insbesondere bei einer starken Beschleunigung und beim Befahren einer steilen Steigungsstrecke, zur Unterstützung des Verbrennungsmotors im so genannten Boostbetrieb, und bei geöffneter Trennkupplung, insbesondere beim Anfahren und beim Befahren von Innenstadtbereichen mit Emissionsbeschränkungen, als alleiniger Antriebsmotor im reinen Elektrobetrieb eingesetzt werden.

Nachteilig an einem derartigen Hybridantriebsstrang ist jedoch, dass das Drehzahlniveau der Elektromaschine identisch zu demjenigen des Verbrennungsmotors ist und die Elektromaschine deshalb zur Erzielung einer für den Elektrobetrieb ausreichenden Leistung relativ groß und schwer ausgebildet sein muss. In Verbindung mit einer achsparallelen Anordnung der Elektromaschine und einer Triebverbindung des Rotors der Elektromaschine mit der Eingangswelle des Schaltgetriebes über eine Eingangsstufe mit hoher Übersetzung, wie einem Stirnzahnradpaar oder einem Umschlingungsgetriebe, kann die Elektromaschine jedoch leistungsschwächer und entsprechend kleiner ausgebildet werden. Ein wesentlicher Nachteil dieses Hybridantriebsstrangs besteht jedoch in der Unterbrechung des Kraftflusses in dem Schaltgetriebe während der Schaltvorgänge, die mit Fahrleistungs- und Komforteinbußen verbunden ist.

Es sind daher verschiedene Ausführungsformen von Hybridantriebssträngen vorgeschlagen worden, bei denen die Elektromaschine triebtechnisch über ein Differenzialgetriebe mit drei Triebelementen eingebunden ist, wobei das erste Triebelement mit einer über eine Trennkupplung mit dem Verbrennungsmotor verbindbaren Eingangswelle des Schaltgetriebes, das zweite Triebelement mit dem Rotor der Elektromaschine und das dritte Triebelement mit einer weiteren Getriebewelle des Schaltgetriebes, z.B. der Ausgangswelle oder einer zweiten Eingangswelle, in Triebverbindung steht.

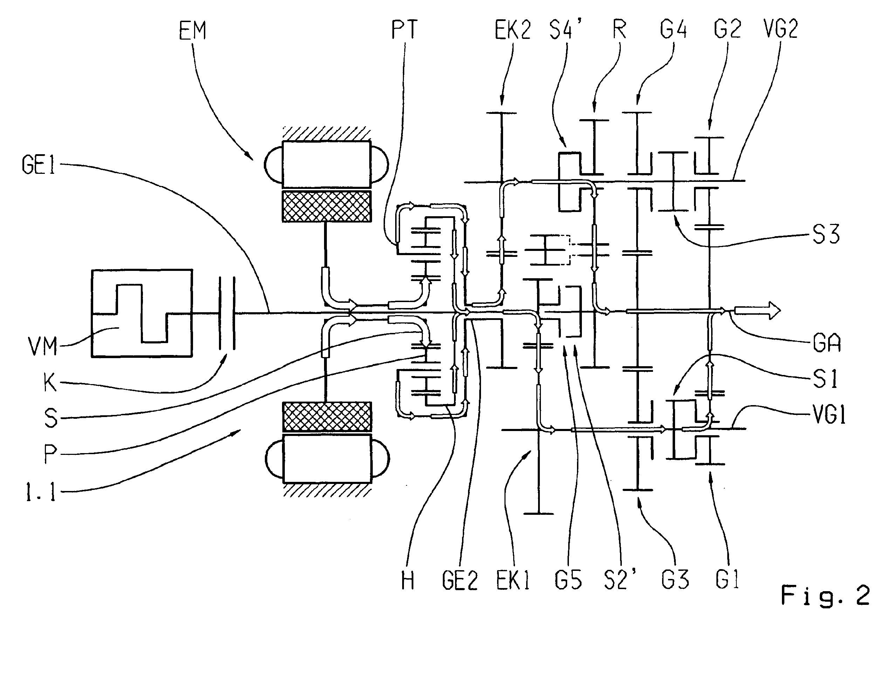

Ein erster derartiger Hybridantriebsstrang ist in der DE 198 49 156 A1, insbesondere in der Ausführungsform nach den dortigen Ansprüchen 1 und 11 bis 13 sowie der dortigen Fig. 2, beschrieben. Das betreffende Schaltgetriebe weist eine Eingangswelle und eine Ausgangswelle auf, die über zugeordnete Gangradsätze unterschiedlicher Übersetzung mittels jeweils einer zugeordneten Gangkupplung selektiv miteinander verbindbar sind. Die Triebwelle des Verbrennungsmotors ist über eine steuerbare Trennkupplung mit der Eingangswelle des Schaltgetriebes verbindbar. Die Elektromaschine ist berührungsfrei koaxial über der Eingangswelle des Schaltgetriebes angeordnet. Das Differenzialgetriebe ist als ein einfaches Planetengetriebe mit einem Sonnenrad, einem mehrere mit dem Sonnenrad in Verzahnungseingriff stehende Planetenräder tragenden Planetenträger und einem mit den Planetenrädern in Verzahnungseingriff stehenden Hohlrad ausgebildet, sowie ebenfalls koaxial über der Eingangswelle des Schaltgetriebes angeordnet. Der Planetenträger bildet das erste Triebelement des Differenzialgetriebes und ist drehfest mit der Eingangswelle des Schaltgetriebes verbunden. Das Sonnenrad bildet das zweite Triebelement des Differenzialgetriebes und ist drehfest mit dem Rotor der Elektromaschine verbunden. Das Hohlrad bildet das dritte Triebelement des Differenzialgetriebes und steht über eine aus einem Stirnzahnradpaar bestehende Auskoppelstufe mit der Ausgangswelle des Schaltgetriebes in Triebverbindung.

Das Differenzialgetriebe bildet einen parallelen Leistungszweig zu dem Schaltgetriebe, wobei der Anteil beziehungsweise die Höhe der Leistungsübertragung des Differenzialgetriebes über die Ansteuerung der Elektromaschine regelbar ist. Bei einem Schaltvorgang ist vorgesehen, dass das Drehmoment des Verbrennungsmotors weitgehend vollständig über das Differenzialgetriebe geleitet wird, bevor der eingelegte Lastgang ausgelegt und der Zielgang synchronisiert sowie nachfolgend eingelegt wird. Danach wird die Elektromaschine kraftlos geschaltet und das Drehmoment des Verbrennungsmotors dadurch wieder vollständig über das Schaltgetriebe auf die Ausgangswelle übertragen.

Da die Synchronisierung des Zielgangs über die relativ träge Motorsteuerung erfolgen soll, ergeben sich jedoch lange Schaltzeiten und eine entsprechend hohe elektrische Leistung der Elektromaschine zur Abstützung des übertragenen Drehmomentes. Zur Ermöglichung der Abstützfunktion muss die Elektromaschine mindestens auf das maximale Drehmoment des Verbrennungsmotors, reduziert um die wirksame Übersetzung, ausgelegt sein, da es sonst während der Schaltvorgänge zu Drehmomenteinbrüchen kommen kann. Im normalen Fahrbetrieb, also bei geschlossener Trennkupplung und eingelegtem Gang in dem Schaltgetriebe, kann die Elektromaschine als Generator zum Laden eines elektrischen Energiespeichers oder als Motor zur Unterstützung des Verbrennungsmotors eingesetzt werden. Bei im Leerlauf befindlichen Schaltgetriebe und blockierter Abtriebswelle kann der Verbrennungsmotor mittels der Elektromaschine gestartet werden. Bei im Leerlauf befindlichen Schaltgetriebe, geschlossener oder fehlender Trennkupplung, und laufendem Verbrennungsmotor kann ein Anfahrvorgang mittels der Elektromaschine durch eine kontinuierliche Steigerung des Abstützmomentes erfolgen, zumindest bis Synchronlauf an der Gangkupplung des ersten Gangs erreicht ist und diese geschlossen werden kann. Ein rein elektrischer Fahrbetrieb mit der Elektromaschine als einzigem Antriebsmotor ist bei geöffneter Trennkupplung und bei einem eingelegten Gang in dem Schaltgetriebe möglich, würde jedoch selbst bei eingelegtem ersten Gang, insbesondere zum Anfahren, eine ungünstig niedrige Gesamtübersetzung der Elektromaschine gegenüber der Ausgangswelle ergeben.

Ein weiterer derartiger Hybridantriebsstrang ist aus der EP 0 845 618 B1 bekannt. Das dort beschriebene Schaltgetriebe weist zwei koaxial angeordnete Eingangswellen auf, die über wechselweise zugeordnete Gangradsätze unterschiedlicher Übersetzung mittels jeweils einer zugeordneten Gangkupplung selektiv mit der Ausgangswelle verbindbar sind. Die Triebwelle des Verbrennungsmotors ist über jeweils eine steuerbare Trennkupplung mit den beiden Eingangswellen verbindbar. Die Elektromaschine ist achsparallel zu den beiden Eingangswellen angeordnet. Das Differenzialgetriebe ist als ein einfaches Planetengetriebe mit einem Sonnenrad, einem mehrere mit dem Sonnenrad in Verzahnungseingriff stehende Planetenräder tragenden Planetenträger, und einem mit den Planetenrädern in Verzahnungseingriff stehenden Hohlrad ausgebildet und koaxial über der ersten Eingangswelle angeordnet. Der Planetenträger bildet ein erstes Triebelement des Differenzialgetriebes und ist drehfest mit der ersten Eingangswelle des Schaltgetriebes verbunden. Das Sonnenrad bildet ein zweites Triebelement des Differenzialgetriebes und steht über eine aus zwei Zahnrädern bestehende Eingangskonstante mit dem Rotor der Elektromaschine in Triebverbindung. Das Hohlrad bildet ein drittes Triebelement des Differenzialgetriebes und ist drehfest mit der zweiten Eingangswelle des Schaltgetriebes verbunden.

Im normalen Fahrbetrieb ist die eine Trennkupplung geschlossen und ein der betreffenden Eingangswelle zugeordneter Gang eingelegt. Die andere Trennkupplung kann ebenfalls geschlossen sein, wobei das Differenzialgetriebe dann starr umläuft. Die der betreffenden Eingangswelle zugeordneten Gänge müssen in diesem Betriebszustand alle ausgelegt sein, da das Schaltgetriebe sonst blockiert wäre. Die Drehzahl des Rotors der Elektromaschine entspricht dem durch die Übersetzung der Eingangskonstanten bestimmten Vielfachen der Drehzahl des Verbrennungsmotors. Die Elektromaschine kann in dieser Betriebsphase als Generator zum Laden eines elektrischen Energiespeichers oder als Motor zur Unterstützung des Verbrennungsmotors eingesetzt werden.

Bei einem Schaltvorgang von einem der einen Eingangswelle zugeordneten Lastgang in einen der anderen Eingangswelle zugeordneten Zielgang ist vorgesehen, dass die Elektromaschine zunächst kraftlos geschaltet und die der anderen Eingangswelle zugeordnete Trennkupplung, falls diese geschlossen ist, geöffnet wird, dass dann die Gangkupplung des Zielgangs mittels der Elektromaschine synchronisiert und nachfolgend geschlossen wird, dass daraufhin die Gangkupplung des Lastgangs mittels der Elektromaschine lastfrei gesteuert und nachfolgend ausgelegt wird, und dass abschließend die andere Eingangswelle mittels der Elektromaschine auf die Synchrondrehzahl an der zugeordneten Trennkupplung beschleunigt oder verzögert wird sowie schließlich die betreffende Trennkupplung geschlossen wird. Nach dem Schaltvorgang kann die Elektromaschine kraftlos geschaltet oder in den Generatorbetrieb gesteuert werden.

Die Schaltvorgänge verlaufen auf diese Art ohne Zugkraftunterbrechung, jedoch relativ umständlich und zeitaufwendig. Wegen der Fremdsynchronisierung mittels der Elektromaschine können die Gangkupplungen als unsynchronisierte Klauenkupplungen ausgebildet sein. Aufgrund der beiden Trennkupplungen, der Eingangskonstanten, der achsparallelen Anordnung der Elektromaschine und der axial benachbarten Anordnung der Gangradsätze ist der Bauaufwand und der Bauraumbedarf dieses bekannten Hybridantriebsstrangs jedoch ungünstig hoch.

Vor diesem Hintergrund liegt der vorliegenden Erfindung die Aufgabe zugrunde, einen Hybridantriebsstrang eines Kraftfahrzeugs der eingangs genannten Art vorzuschlagen, der bei einfachem und Platz sparendem Aufbau eine hohe Gesamtübersetzung der Elektromaschine gegenüber der Ausgangswelle des Schaltgetriebes ermöglicht und eine verbesserte Steuerbarkeit aufweist. Des Weiteren soll ein Verfahren zur Steuerung des erfindungsgemäßen Hybridantriebsstrangs angegeben werden.

Gemäß den Merkmalen des Patentanspruchs 1 betrifft die Erfindung daher zunächst einen Hybridantriebsstrang eines Kraftfahrzeugs, der einen Verbrennungsmotor mit einer Triebwelle, eine als Motor und als Generator betreibbare Elektromaschine mit einem Rotor, ein mehrstufiges Schaltgetriebe mit zwei Eingangswellen und einer Ausgangswelle sowie ein Differenzialgetriebe aufweist, wobei zumindest eine der Eingangswellen über eine zugeordnete Trennkupplung mit der Triebwelle verbindbar ist, beide Eingangswellen über wechselweise zugeordnete Gangradsätze unterschiedlicher Übersetzung und jeweils eine zugeordnete Gangkupplung selektiv mit der Ausgangswelle verbindbar sind, und das Differenzialgetriebe als ein einfaches Planetengetriebe ausgebildet ist, welches koaxial über der ersten Eingangswelle angeordnet ist, dessen Hohlrad drehfest mit der einen Eingangswelle verbunden ist, dessen Planetenträger drehfest mit der anderen Eingangswelle verbunden ist, und dessen Sonnenrad mit dem Rotor in Triebverbindung ist.

Außerdem ist bei diesem Hybridantrieb vorgesehen, dass nur die mit dem Hohlrad des Planetengetriebes drehfest verbundene erste Eingangswelle des Schaltgetriebes über eine Trennkupplung mit der Triebwelle des Verbrennungsmotors verbindbar ist, und dass das Schaltgetriebe als ein Vorgelegegetriebe mit einer koaxial geschachtelten Anordnung der beiden Eingangswellen, mit einer dazu koaxial benachbarten Anordnung der Ausgangswelle und mit zwei jeweils über eine separate Eingangskonstante mit einer der beiden Eingangswellen in Triebverbindung stehenden Vorgelegewellen ausgebildet ist, dessen Gangradsätze in wechselweiser Zuordnung jeweils an der ersten Vorgelegewelle und an der Ausgangswelle sowie an der zweiten Vorgelegewelle und an der Ausgangswelle angeordnet sind.

Der erfindungsgemäße Hybridantriebsstrang weist demnach zwei Übertragungszweige zur Übertragung eines Drehmomentes von dem Verbrennungsmotor zu der mit einem Achsantrieb einer angetriebenen Fahrzeugachse oder einem Zentraldifferenzial in Verbindung stehenden Ausgangswelle auf. Der erste Übertragungszweig umfasst die Trennkupplung, die erste Eingangswelle, die erste Eingangskonstante sowie die Gangkupplung und den Gangradsatz eines eingelegten Gangs, welcher der ersten Eingangswelle zugeordnet ist. Die Übertragung eines Drehmomentes über diesen ersten Übertragungszweig erfolgt rein mechanisch. Mit der Drehzahl $n_{vm}$ der Triebwelle des Verbrennungsmotors, der Drehzahl $n_{GA}$ der Ausgangswelle des Schaltgetriebes, der Übersetzung der ersten, mit der ersten Eingangswelle verbundenen Eingangskonstanten $i_{EK1}$, und mit der Übersetzung des Gangradsatzes eines eingelegten, der ersten Eingangswelle zugeordneten Gangs $i_{G1*}$ beträgt die Übersetzung zwischen dem Verbrennungsmotor und der Ausgangswelle des Schaltgetriebes

$$n_{VM}/n_{GA} = i_{EK1} * i_{G1*} .$$

Der zweite Übertragungszweig umfasst die Trennkupplung, die erste Eingangswelle, das Hohlrad und den Planetenträger mit den Planetenrädern des Planetengetriebes, die zweite Eingangswelle, die zweite Eingangskonstante sowie die Gangkupplung und den Gangradsatz eines eingelegten Gangs, welcher der zweiten Eingangswelle zugeordnet ist. Die Übertragung eines Drehmomentes über diesen zweiten Übertragungszweig erfolgt im Prinzip auch mechanisch. Jedoch ist zur Übertragung des Drehmomentes über das Planetengetriebe eine Abstützung des Sonnenrades über die mit diesem in Triebverbindung stehende Elektromaschine erforderlich. Hierdurch ist das über den zweiten Übertragungszweig übertragene Drehmoment mittels der Elektromaschine regelbar, wodurch sich vorteilhafte Steuerungseigenschaften ergeben. Mit der Übersetzung der zweiten, mit der zweiten Eingangswelle verbundenen Eingangskonstanten $i_{EK2}$, der Übersetzung des Gangradsatzes eines eingelegten, der zweiten Eingangswelle zugeordneten Gangs $i_{G2*}$ und mit der Standübersetzung $i_{St}$ des Planetengetriebes beträgt die Übersetzung zwischen dem Verbrennungsmotor und der Ausgangswelle des Schaltgetriebes bei exakter Abstützung, also bei stillstehendem Sonnenrad des Planetengetriebes,

$$n_{VM}/n_{GA} = (1 + 1/i_{St}) * i_{EK2} * i_{G2*} .$$

Im reinen Elektrobetrieb wird ein Drehmoment der Elektromaschine über das Sonnenrad in das Planetengetriebe eingeleitet und von dort bei geöffneter Trennkupplung und bei jeweils einem eingelegten Gang über beide Übertragungszweige auf die Ausgangswelle übertragen, wobei sich die wirksame Übersetzung aus der Kombination der Übersetzungen der Gangradsätze der beiden eingelegten Gänge, der Übersetzungen der beiden Eingangskonstanten und der Standübersetzung des Planetengetriebes ergibt. Die Drehzahlverhältnisse an dem Planetengetriebe sind mit der Drehzahl des Sonnenrades $n_S$, der Drehzahl des Planetenträgers $n_{PT}$ und der Drehzahl des Hohlrades $n_H$ allgemein durch die Gleichung

$$n_S = (1 + i_{St}) * n_{PT} - i_{St} * n_H$$

gegeben. Daraus folgt die Übersetzung zwischen dem mit dem Rotor der Elektromaschine in Triebverbindung stehenden Sonnenrad des Planetengetriebes und der Ausgangswelle des Schaltgetriebes mit

$$n_S/n_{GA} = (1 + i_{St}) * i_{EK2} * i_{G2^*} - i_{St} * i_{EK1} * i_{G1^*}.$$

Durch eine geeignete Auswahl der Übersetzungen insbesondere der Gangradsätze und deren Zuordnung zu den beiden Eingangswellen kann eine extrem hohe Gesamtübersetzung erzielt werden, die besonders zum elektromotorischen Anfahren bei hoher Anfahrlast geeignet ist. Zudem ergibt sich aus der Vorgelegebauart des Schaltgetriebes eine besonders für den Längseinbau des Hybridantriebsstrangs vorteilhafte Koaxialanordnung der Triebwelle des Verbrennungsmotors und der Ausgangswelle des Schaltgetriebes sowie kompakte Abmessungen des Hybridantriebsstrangs, insbesondere in axialer Richtung.

Vorteilhafte Ausgestaltungen und Weiterbildungen des erfindungsgemäßen Hybridantriebsstrangs sind Gegenstand der Ansprüche 2 bis 13, wogegen in den darauf folgenden Ansprüchen 14 bis 27 Verfahrensabläufe zur Steuerung des erfindungsgemäßen Hybridantriebsstrangs angegeben sind.

Zur Erzielung möglichst kompakter Abmessungen des Hybridantriebsstrangs ist die Elektromaschine bevorzugt koaxial über der ersten Eingangswelle angeordnet, wobei der Rotor der Elektromaschine unmittelbar mit dem Sonnenrad des Planetengetriebes drehfest verbunden ist. Die Drehzahl des Rotors der Elektromaschine $n_{EM}$ ist somit gleich der Drehzahl des Sonnenrades des Planetengetriebes $n_S$, so dass die Übersetzung zwischen dem Rotor der Elektromaschine und der Ausgangswelle des Schaltgetriebes bei jeweils in beiden Übertragungszweigen eingelegtem Gang durch

$$n_{EM}/n_{GA} = (1 + i_{St}) * i_{EK2} * i_{G2^*} - i_{St} * i_{EK1} * i_{G1^*}$$

gegeben ist. Um bei dieser Anordnung die Übertragung des maximalen Drehmomentes $M_{VM\_max}$ des Verbrennungsmotors über den zweiten Übertragungszweig zu gewährleisten, weist die Elektromaschine ein maximales Drehmoment $M_{EM\_max}$ auf, das mindestens dem mit der Standübersetzung $i_{St}$ des Planetengetriebes gebildeten Teil des maximalen Drehmomentes $M_{VM\_max}$ des Verbrennungsmotors entspricht ($M_{EM\_max} >= 1/i_{St} * M_{VM\_max}$).

Um die Elektromaschine gegenüber der vorbeschriebenen Ausführungsform noch drehmomentschwächer und somit kleiner sowie leichter ausführen zu können, ist es jedoch auch möglich, die Elektromaschine achsparallel benachbart zu der ersten Eingangswelle anzuordnen, wobei der Rotor der Elektromaschine über eine Eingangskonstante mit einer Übersetzung $i_{EK}$ größer als Eins mit dem Sonnenrad des Planetengetriebes in Triebverbindung steht ($i_{EK} > 1,0$).

Da die Drehzahl $n_{EM}$ des Rotors der Elektromaschine das mit der Übersetzung der Eingangskonstanten $i_{EK}$ gebildete Vielfache der Drehzahl des Sonnenrades des Planetengetriebes $n_S$ beträgt, ist die Übersetzung zwischen dem Rotor der Elektromaschine und der Ausgangswelle des Schaltgetriebes bei jeweils in beiden Übertragungszweigen eingelegtem Gang in diesem Fall durch

$$n_{EM}/n_{GA} = i_{EK} * [ (1 + i_{St}) * i_{EK2} * i_{G2^*} - i_{St} * i_{EK1} * i_{G1^*} ]$$

gegeben.

Die zugehörige Eingangskonstante ist bevorzugt als ein aus zwei Stirnrädern gebildetes Zahnradpaar ausgeführt, sie kann alternativ dazu jedoch auch als ein Riemen- oder Kettentrieb ausgebildet sein. Um bei dieser Anordnung die Übertragung des maximalen Drehmomentes $M_{VM\_max}$ des Verbrennungsmotors über den zweiten Übertragungszweig zu gewährleisten, weist die Elektromaschine zweckmäßig ein maximales Drehmoment $M_{EM\_max}$ auf, das mindestens dem mit dem Produkt der Übersetzung $i_{EK}$ der Eingangskonstanten der Elektromaschine und der Standübersetzung $i_{St}$ des Planetengetriebes gebildeten Teil des maximalen Drehmomentes $M_{VM\_max}$ des Verbrennungsmotors entspricht ($M_{EM\_max} >= 1/(i_{EK} * i_{St}) * M_{VM\_max}$).

Bei der Abstützung eines über das Planetengetriebe übertragenen Drehmomentes wird zwar nominell keine Leistung verbraucht, da das Sonnenrad dabei stillsteht. In der Elektromaschine wird zur Erzeugung des erforderlichen Stützmomentes des Sonnenrades aufgrund der ohmschen Widerstände in den Erregerwicklungen aber dennoch elektrische Leistung verbraucht, welches zumindest über einen längeren Zeitraum ungünstig ist. Es ist daher vorteilhaft, wenn für längere Betriebsphasen mit einer Kraftübertragung über denselben Gang des zweiten Übertragungszweiges, also zur stationären Abstützung eines übertragenen Drehmomentes, eine steuerbare Bremskupplung zwischen dem Sonnenrad des Planetengetriebes oder dem Rotor der Elektromaschine sowie einem gehäusefesten Bauteil angeordnet ist. Diese Bremskupplung wird vorteilhaft bei stationärer Fahrt mit einem der zweiten Eingangswelle zugeordneten Gang, also außerhalb von mit Schaltvorgängen verbundenen Beschleunigungs- und Verzögerungsphasen, geschlossen und damit der genannte Energieverbrauch der Elektromaschine vermieden.

In dem Schaltgetriebe sind bevorzugt die Zahnräder der ungeraden Gänge an der ersten Vorgelegewelle sowie an der Ausgangswelle angeordnet und somit der ersten Eingangswelle zugeordnet, und die Gangräder der geraden Gänge sowie einer Umkehrstufe an der zweiten Vorgelegewelle sowie an der Ausgangswelle angeordnet und somit der zweiten Eingangswelle zugeordnet.

Hierdurch ergibt sich bei gleichzeitig eingelegtem ersten Gang und eingelegter Umkehrstufe eine besonders große Gesamtübersetzung zwischen dem Rotor der Elektromaschine und der Ausgangswelle, die insbesondere zum elektromotorischen Anfahren bei hoher Anfahrlast geeignet ist. Zudem wirken in diesem Fall die in beiden Übertragungszweigen übertragenen Drehmomente treibend auf die Ausgangswelle, so dass keine den Wirkungsgrad der Kraftübertragung verschlechternde Blindleistung entsteht. Die Umkehrstufe muss nicht zwangsläufig als Rückwärtsgang mit hoher negativer Übersetzung ausgebildet sein, da das elektromotorische Rückwärtsanfahren bei gleicher Gesamtübersetzung wie bei der entsprechenden Vorwärtsanfahrt einfach durch eine Umkehrung der Drehrichtung der Elektromaschine erfolgen kann.

Zur Erzielung einer besonders kompakten Bauweise des Schaltgetriebes und damit des gesamten Hybridantriebsstrangs weisen die vorzugsweise jeweils als Stirnzahnradpaar ausgebildeten Eingangskonstanten der beiden Vorgelegewellen zweckmäßig jeweils eine Übersetzung größer als Eins auf ($i_{EK1} > 1,0$; $i_{EK2} > 1,0$). Hierdurch können die Übersetzungen der Gangradsätze entsprechend kleiner ausgeführt werden und somit der radiale Abstand der Vorgelegewellen von der Abtriebswelle verringert werden.

Des Weiteren sind die Gangradsätze hierzu vorteilhaft jeweils aus einem drehfest mit der Ausgangswelle verbundenen Festrad und einem drehbar auf der zugeordneten Vorgelegewelle gelagerten Losrad gebildet, und die Losräder jeweils über eine zugeordnete Gangkupplung mit der zugeordneten Vorgelegewelle verbindbar, wobei die Gangkupplungen jeweils paarweise in gemeinsamen Schaltpaketen zusammengefasst sind. Der Zahnradsatz der Umkehrstufe weist in an sich bekannter Weise ein auf einer gesonderten Welle gelagertes zusätzliches Zwischenrad zur Drehrichtungsumkehr auf.

Durch die Anordnung der Schaltkupplungen auf den Vorgelegewellen ergibt sich zum einen eine bestmögliche Schachtelung der Gangradsätze mit einem geringstmöglichen axialen Abstand der Gangradsätze sowie einer bestmöglichen Zugänglichkeit der Gangkupplungen z. B. durch die Schaltgabeln der Schaltstangen. Ebenso ist es hierdurch möglich, dass zumindest ein an der ersten Vorgelegewelle und an der Ausgangswelle angeordneter Gangradsatz sowie ein an der zweiten Vorgelegewelle und an der Ausgangswelle angeordneter Gangradsatz in derselben Axialposition angeordnet sowie und ein gemeinsames Festrad aufweisen.

Ebenso ist vorteilhaft eine direkte Gangkupplung zwischen einer der beiden Eingangswellen und der Ausgangswelle angeordnet, wodurch auf einfache und Platz sparende Weise ein Direktgang mit der Übersetzung i = 1,0 geschaffen ist und ein entsprechender Gangradsatz eingespart werden kann.

Um im elektromotorischen Fahrbetrieb Energie zur gegenseitigen Abstützung einzusparen und die damit verbundene Blindleistung zu vermeiden, kann zur Abstützung des über die jeweils andere Eingangswelle übertragenen Drehmomentes an beiden Vorgelegewellen jeweils eine steuerbare Bremskupplung zur Verbindung mit einem gehäusefesten Bauteil angeordnet sein. Ist eine der beiden Bremskupplungen geschlossen und damit über die zugeordnete Vorgelegewelle sowie die betreffende Eingangskonstante die zugeordnete Eingangswelle gehäusefest arretiert, so ist das Planetengetriebe als Standgetriebe mit festem Hohlrad bzw. mit festem Planetenrad wirksam. Um den Bauaufwand für die beiden Bremskupplungen möglichst gering zu halten, sind diese in Aufbau und Anordnung bevorzugt baugleich wie die genannten Gangkupplungen ausgebildet und steuerungstechnisch in die Betätigung der Gangkupplungen eingebunden.

Nachfolgend wird beschrieben, wie der Hybridantriebsstrang gemäß der Erfindung betreibbar ist.

Zum elektromotorischen Anfahren ist vorgesehen, dass die Trennkupplung geöffnet wird, dass eine Gangkupplung eines der ersten Eingangswelle zugeordneten Gangs und eine Gangkupplung eines der zweiten Eingangswelle zugeordneten Gangs geschlossen werden, und dass danach die Elektromaschine im motorischen Betrieb beschleunigt wird, wobei die Auswahl der beiden einzulegenden Gänge in Abhängigkeit der Anfahrlast erfolgt.

Bei hoher Anfahrlast, wie z. B. beim Anfahren am Berg mit hoher Zuladung, werden bevorzugt die Gangkupplung des kleinsten Gangs der ersten Eingangswelle und die Gangkupplung der Umkehrstufe der zweiten Eingangswelle geschlossen, und die Elektromaschine wird, bezogen auf die Drehrichtung der Triebwelle des Verbrennungsmotors, bei einer Vorwärtsanfahrt rückwärts und bei einer Rückwärtsanfahrt vorwärts beschleunigt. Hierdurch ergibt sich eine größtmögliche Übersetzung zwischen dem Rotor der Elektromaschine und der Ausgangswelle des Schaltgetriebes, und beide Übertragungszweige wirken treibend auf die Ausgangswelle, wodurch Blindleistung vermieden und ein hoher Übertragungswirkungsgrad erzielt wird.

Bei einer unmittelbaren Verbindung des Rotors der Elektromaschine mit dem Sonnenrad des Planetengetriebes und mit einer Standübersetzung des Planetengetriebes von $i_{St}$ = 3,0 , einer Übersetzung der Eingangskonstanten der ersten Eingangswelle von $i_{EK1}$ = 2,5 , einer Übersetzung des Gangradsatzes des der ersten Eingangswelle zugeordneten ersten Gangs von $i_{G1}$ = 2,4 , einer Übersetzung der Eingangskonstanten der zweiten Eingangswelle von $i_{EK2}$ = 1,28 und einer Übersetzung des Gangradsatzes der der zweiten

Eingangswelle zugeordneten Umkehrstufe von $i_R$ = -0,88 ergibt sich beispielsweise eine resultierende Übersetzung von

$$n_{EM}/n_{GA} = (1 + i_{St}) * i_{EK2} * i_R - i_{St} * i_{EK1} * i_{G1} = -22,5.$$

Bei mittlerer Anfahrlast, wie z. B. beim Anfahren in der Ebene mit mittlerer Zuladung, werden bevorzugt die Gangkupplung des kleinsten Gangs der ersten Eingangswelle und die Gangkupplung des größten Gangs der zweiten Eingangswelle geschlossen, und die Elektromaschine wird, bezogen auf die Drehrichtung der Triebwelle des Verbrennungsmotors, bei einer Vorwärtsanfahrt rückwärts und bei einer Rückwärtsanfahrt vorwärts beschleunigt.

Hierdurch ergibt sich eine mittlere Übersetzung zwischen dem Rotor der Elektromaschine und der Ausgangswelle des Schaltgetriebes, und durch teilweise Rückkopplung des übertragenen Drehmomentes entsteht Blindleistung. Bei einer unmittelbaren Verbindung des Rotors der Elektromaschine mit dem Sonnenrad des Planetengetriebes und mit einer Standübersetzung des Planetengetriebes von $i_{St}$ = 3,0 , einer Übersetzung der Eingangskonstanten der ersten Eingangswelle von $i_{EK1}$ = 2,5 , einer Übersetzung des Gangradsatzes des der ersten Eingangswelle zugeordneten ersten Gangs von $i_{G1}$ = 2,4 , einer Übersetzung der Eingangskonstanten der zweiten Eingangswelle von $i_{EK2}$ = 1,28 und einer Übersetzung des Gangradsatzes der der zweiten Eingangswelle zugeordneten vierten Gangs von $i_{G4}$ = 0,82 ergibt sich beispielsweise eine resultierende Übersetzung von

$$n_{EM}/n_{GA} = (1 + i_{St}) * i_{EK2} * i_{G4} - i_{St} * i_{EK1} * i_{G1} = -13,8.$$

Bei niedriger Anfahrlast, wie z. B. beim Anfahren auf einer Gefällstrecke oder in der Ebene mit geringer Zuladung, werden bevorzugt die Gangkupplung des größten Gangs der ersten Eingangswelle und die Gangkupplung des kleinsten Gangs der zweiten Eingangswelle geschlossen, und die Elektromaschine wird, bezogen auf die Drehrichtung der Triebwelle des Verbrennungsmotors, bei einer Vorwärtsanfahrt vorwärts und bei einer Rückwärtsanfahrt rückwärts beschleunigt. Hierdurch ergibt sich eine relativ kleine Übersetzung zwischen dem Rotor der Elektromaschine und der Ausgangswelle des Schaltgetriebes, und durch teilweise Rückkopplung des übertragenen Drehmomentes entsteht Blindleistung.

Bei einer unmittelbaren Verbindung des Rotors der Elektromaschine mit dem Sonnenrad des Planetengetriebes und mit einer Standübersetzung des Planetengetriebes von $i_{St}$ = 3,0 , einem als Direktgang ausgebildeten fünften Gang der ersten Eingangswelle mit der Übersetzung $i_{G5}$ = 1,0 , einer Übersetzung der Eingangskonstanten der zweiten Eingangswelle von $i_{EK2}$ = 1,28 und einer Übersetzung des Gangradsatzes des der zweiten Eingangswelle zugeordneten zweiten Gangs von $i_{G2}$ = 1,94 ergibt sich beispielsweise eine resultierende Übersetzung von

$$n_{EM}/n_{GA} = (1 + i_{St}) * i_{EK2} * i_{G2} - i_{St} * i_{G5} = 6,9.$$

Zum elektromotorischen Anfahren kann anstelle einer Gangkupplung der ersten Eingangswelle auch eine der ersten Eingangswelle zugeordnete Bremskupplung geschlossen werden. Damit wird das Planetengetriebe zum Standgetriebe mit arretiertem Hohlrad, und zwischen der Drehzahl des Sonnenrades $n_S$ und der Drehzahl des Planetenträgers $n_{PT}$ gilt:

$$n_S = (1 + i_{St}) * n_{PT}$$

Bei einer unmittelbaren Verbindung des Rotors der Elektromaschine mit dem Sonnenrad des Planetengetriebes und mit einer Standübersetzung des Planetengetriebes von $i_{St}$ = 3,0 , einer Übersetzung der Eingangskonstanten der zweiten Eingangswelle von $i_{EK2}$ = 1,28 und einer Übersetzung des Gangradsatzes des der zweiten Eingangswelle zugeordneten zweiten Gangs von $i_{G2}$ = 1,94 ergibt sich dann beispielsweise eine resultierende Übersetzung von

$$n_{EM}/n_{GA} = (1 + i_{St}) * i_{EK2} * i_{G2} = 9,9.$$

Ebenso kann zum elektromotorischen Anfahren anstelle einer Gangkupplung der zweiten Eingangswelle eine der zweiten Eingangswelle zugeordnete Bremskupplung geschlossen werden. Damit wird das Planetengetriebe zum Standgetriebe mit arretiertem Planetenträger und zwischen der Drehzahl des Sonnenrades $n_S$ und der Drehzahl des Hohlrades $n_H$ gilt:

$$n_S = - i_{St} * n_H$$

Bei einer unmittelbaren Verbindung des Rotors der Elektromaschine mit dem Sonnenrad des Planetengetriebes und mit einer Standübersetzung des Planetengetriebes von $i_{St}$ = 3,0 , einer Übersetzung der Eingangskonstanten der ersten Eingangswelle von $i_{EK1}$ = 2,5 und einer Übersetzung des Gangradsatzes des der ersten Eingangswelle zugeordneten ersten Gangs von $i_{G1}$ = 2,4 ergibt sich dann beispielsweise eine resultierende Übersetzung von

$$n_{EM}/n_{GA} = - i_{St} * i_{EK1} * i_{G1} = -18,0.$$

Reicht das Antriebsmoment der Elektromaschine, z. B. aufgrund unzureichender Ladung des zugeordneten elektrischen Energiespeichers, für eine gewünschte Anfahrbeschleunigung nicht aus, so kann die Elektromaschine bei laufendem Verbrennungsmotor durch ein zumindest teilweises Schließen der Trennkupplung von dem Verbrennungsmotor unterstützt werden.

Bei ausreichender elektrischer Energie wird der zuvor abgestellte Verbrennungsmotor bevorzugt mit dem Erreichen oder Überschreiten einer vorbestimmten Mindestdrehzahl des Verbrennungsmotors an der ersten Eingangswelle durch das Schließen der Trennkupplung impulsgestartet.

Eine Lastübernahme durch den Verbrennungsmotor erfolgt generell dadurch, dass mit dem Erreichen der Drehzahl des Verbrennungsmotors durch die erste Eingangswelle die Trennkupplung geschlossen wird, und dass danach zeitlich überschnitten das Drehmoment des Verbrennungsmotors erhöht sowie das Drehmoment der Elektromaschine unter Umständen bis auf Null reduziert wird. Hieraus folgt auch, dass der in dem ersten Übertragungszweig eingelegte, also der ersten Eingangswelle zugeordnete Gang so ausgewählt wird, dass nach der Lastübernahme durch den Verbrennungsmotor die gewünschte Steig- und Beschleunigungsfähigkeit des Kraftfahrzeugs vorliegt.

Außerhalb von mit Schaltvorgängen verbundenen Beschleunigungs- und Verzögerungsphasen, also im weitgehend stationären Fahrbetrieb, wird zur Abstützung eines von dem Verbrennungsmotor über die zweite Eingangswelle übertragenen Drehmomentes vorteilhaft eine der Elektromaschine zugeordnete Bremskupplung geschlossen und somit eine elektrische Verlustleistung durch ohmsche Widerstände der Erregerwicklungen der Elektromaschine vermieden.

Ein verbrennungsmotorisches Anfahren, das insbesondere bei weitgehend leerem elektrischen Energiespeicher zur Anwendung kommt, erfolgt bevorzugt derart, dass nach dem Starten des Verbrennungsmotors bei einer Vorwärtsanfahrt die Gangkupplung des kleinsten Gangs der zweiten Eingangswelle und bei einer Rückwärtsanfahrt die Gangkupplung der Umkehrstufe der zweiten Eingangswelle geschlossen wird, dass nachfolgend die Trennkupplung geschlossen wird, und dass danach die Elektromaschine im generatorischen Betrieb unter gleichzeitiger Erhöhung des Drehmomentes des Verbrennungsmotors und des generatorischen Drehmomentes der Elektromaschine bis zum Stillstand der Elektromaschine verzögert wird.

Danach wird die Elektromaschine zweckmäßig im motorischen Betrieb weiter beschleunigt, bis an der Gangkupplung des nächsthöheren Gangs der ersten Eingangswelle ein Synchronlauf erreicht ist, die betreffende Gangkupplung geschlossen wird, und anschließend die Elektromaschine kraftlos geschaltet sowie die Gangkupplung des kleinsten Gangs der zweiten Eingangswelle geöffnet wird.

Im verbrennungsmotorischen Fahrbetrieb erfolgt ein Gangwechsel von einem Lastgang der ersten Eingangswelle in einen Zielgang der zweiten Eingangswelle derart, dass zuerst die Vorgelegewelle des Zielgangs mittels der Elektromaschine bis zum Erreichen der Synchrondrehzahl an der Gangkupplung des Zielgangs beschleunigt wird, dass dann die Gangkupplung des Zielgangs geschlossen wird, und dass anschließend das Stützmoment der Elektromaschine soweit erhöht wird, bis die Gangkupplung des Lastgangs lastfrei geöffnet werden kann.

Ein entsprechender Gangwechsel von einem Lastgang der zweiten Eingangswelle in einen Zielgang der ersten Eingangswelle erfolgt dagegen derart, dass zunächst die Vorgelegewelle des Zielgangs bis zum Erreichen der Synchrondrehzahl an der Gangkupplung des Zielgangs bei einer Hochschaltung durch eine Erhöhung des Stützmomentes der Elektromaschine verzögert und bei einer Rückschaltung durch eine Verringerung des Stützmomentes der Elektromaschine beschleunigt wird, dass dann die Gangkupplung des Zielgangs geschlossen wird, und dass anschließend die Elektromaschine lastfrei geschaltet sowie die Gangkupplung des Lastgangs geöffnet wird.

Zur Verdeutlichung der Erfindung ist der Beschreibung eine Zeichnung mit Ausführungsbeispielen beigefügt. In diesen zeigt:

Fig. 1 eine erste Ausführungsform eines erfindungsgemäßen Hybridantriebsstranges in einer schematischen Darstellung,

Fig. 2 den Kraftfluss in dem Hybridantriebsstrangs gemäß Fig. 1 bei einem elektromotorischen Anfahrvorgang,

Fig. 3 eine erste Weiterbildung des Hybridantriebsstrangs nach Fig. 1,

Fig. 4 eine zweite Weiterbildung des Hybridantriebsstrangs ge- mäß Fig. 1,

Fig. 5 eine zweite Ausführungsform des erfindungsgemäßen Hybridantriebsstranges in einer schematischen Darstellung,

Fig. 6 den Kraftfluss in dem Hybridantriebsstrang gemäß Fig. 5 bei einem Impulsstart des Verbrennungsmotors,

Fig. 7 eine dritte Ausführungsform des erfindungsgemäßen Hyb- ridantriebsstrangs in einer schematischen Darstellung,

Fig. 8 den Kraftfluss in dem Hybridantriebsstrang gemäß Fig. 7 bei einem elektromotorischen Anfahrvorgang und

Fig. 9 eine Weiterbildung des Hybridantriebsstrangs gemäß Fig. 7.

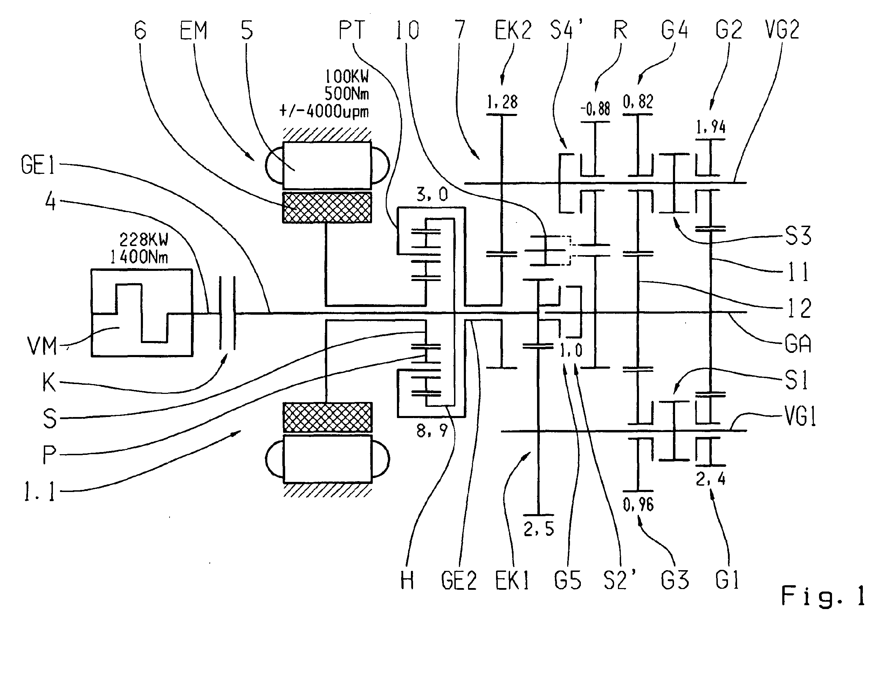

Eine erste Ausführungsform des erfindungsgemäßen Hybridantriebsstrangs 1.1 ist in schematischer Form in Fig. 1 abgebildet. Dieser Hybridantriebstrang 1.1 umfasst einen Verbrennungsmotor VM mit einer Triebwelle 4, eine als Motor und als Generator betreibbare Elektromaschine EM mit einem Stator 5 und einem Rotor 6, ein mehrstufiges Schaltgetriebe 7 mit zwei Eingangswellen GE1, GE2 und einer Ausgangswelle GA und ein Differenzialgetriebe 8 mit drei Triebelementen.

Die erste Eingangswelle GE1 des Schaltgetriebes 7 ist über eine zugeordnete Trennkupplung K mit der Triebwelle 4 des Verbrennungsmotors VM verbindbar. Das Differenzialgetriebe 8 ist als ein einfaches Planetengetriebe 9 mit einem Sonnenrad S, einem Planetenträger PT und einem Hohlrad H ausgebildet ist, wobei der Planetenträger PT mehrere drehbare Planetenräder P trägt, die jeweils mit dem Sonnenrad S und dem Hohlrad H in Verzahnungseingriff sind. Das Planetengetriebe 9 ist koaxial über der ersten Eingangswelle GE1 angeordnet. Das Hohlrad H ist drehfest mit der ersten Eingangswelle GE1 des Schaltgetriebes 7 verbunden, der Planetenträger PT ist drehfest mit der zweiten Eingangswelle GE2 des Schaltgetriebes 7 verbunden, und das Sonnenrad S ist drehfest mit dem Rotor 6 der Elektromaschine EM gekoppelt.

Das Schaltgetriebe 7 ist als ein Vorgelegegetriebe mit einer koaxial geschachtelten Anordnung der beiden Eingangswellen GE1 und GE2, mit einer dazu koaxial benachbarten Anordnung der Ausgangswelle GA, und mit zwei jeweils über eine Eingangskonstante EK1 bzw. EK2 mit einer der beiden Eingangswellen GE1, GE2 in Triebverbindung stehenden Vorgelegewellen VG1, VG2 ausgebildet, wobei die beiden Eingangskonstanten EK1, EK2 jeweils aus einem Zahnradpaar bestehen und jeweils eine Übersetzung größer als eins aufweisen ($i_{EK1} > 1,0$; $i_{EK2} > 1,0$). Die zweite Eingangswelle EG2 ist als Hohlwelle ausgebildet und koaxial über der zentral angeordneten ersten Eingangswelle EG1 angeordnet.

Das Schaltgetriebe 7 weist fünf Vorwärtsgänge G1 bis G5 und eine Umkehrstufe R auf. Der ersten Eingangswelle EG1 sind die ungeraden Gänge G1, G3, G5 zugeordnet, indem jeweils ein Gangradsatz des ersten Gangs G1 und des dritten Gangs G3, die jeweils aus einem Losrad und einem Festrad bestehen, auf der ersten Vorgelegewelle VG1 bzw. auf der Ausgangswelle GA angeordnet ist. Die Festräder des ersten Gangs G1 und des dritten Gangs G3 sind drehfest auf der Ausgangswelle GA angeordnet. Die Losräder des ersten Gangs G1 und des dritten Gangs G3 sind drehbar auf der ersten Vorgelegewelle VG1 angeordnet und über zugeordnete Gangkupplungen, die in einem gemeinsamen Schaltpaket S1 zusammengefasst sind, selektiv mit der ersten Vorgelegewelle VG1 verbindbar. Der fünfte Gang G5 ist als Direktgang ausgebildet und über eine zwischen der ersten Eingangswelle GE1 und der Ausgangswelle GA angeordnete Gangkupplung S2' ein- und auslegbar.

Der zweiten Eingangswelle EG2 sind die geraden Gänge G2 sowie G4 sowie die Umkehrstufe R zugeordnet, indem jeweils ein Gangradsatz des zweiten Gangs G2, des vierten Gangs G4 und der Umkehrstufe R, die jeweils ein Losrad und ein Festrad umfassen, auf der zweiten Vorgelegewelle VG2 bzw. auf der Ausgangswelle GA angeordnet ist. Der Gangradsatz der Umkehrstufe R weist zur Drehrichtungsumkehr ein zusätzliches Zwischenrad 10 auf. Die Festräder des zweiten Gangs G2, des vierten Gangs G4 und der Umkehrstufe R sind drehfest auf der Ausgangswelle GA angeordnet. Die Losräder des zweiten Gangs G2, des vierten Gangs G4 und der Umkehrstufe R sind drehbar auf der zweiten Vorgelegewelle VG2 angeordnet und über zugeordnete Gangkupplungen selektiv mit der zweiten Vorgelegewelle VG2 verbindbar. Die Gangkupplungen des zweiten Gangs G2 und des vierten Gangs G4 sind in einem gemeinsamen Schaltpaket S3 zusammengefasst, wogegen die Gangkupplung S4' der Umkehrstufe separat angeordnet ist. Die Gangradsätze des ersten Gangs G1 und des zweiten Gangs G2 sowie die Gangradsätze des dritten Gangs G3 und des vierten Gangs G4 sind jeweils in derselben Axialposition angeordnet und weisen jeweils ein gemeinsames Festrad 11, 12 auf.

Durch die Ausbildung und Anordnung der Elektromaschine EM, des Differenzialgetriebes 8 und des Schaltgetriebes 7 weist der Hybridantriebsstrang 1.1 bei kompakten Abmessungen vielfältige Steuerungsmöglichkeiten auf. Für den verbrennungsmotorischen Fahrbetrieb stehen zur Übertragung eines Drehmomentes von dem Verbrennungsmotor VM zur Ausgangswelle GA zwei Übertragungszweige zur Verfügung. Der erste Übertragungszweig verläuft von der Trennkupplung K über die erste Eingangswelle GE1, die zugeordnete Eingangskonstante EK1 und den Gangradsatz des eingelegten Gangs G1 bzw. G3 zu der Ausgangswelle GA, und bei eingelegtem fünftem Gang G5 direkt von der ersten Eingangswelle GE1 zu der Ausgangswelle GA.

Der zweite Übertragungszweig verläuft von der Trennkupplung K über die erste Eingangswelle GE1, das Hohlrad H, die Planetenräder P und den Planetenträger PT des Planetengetriebes 9, die zweite Eingangswelle GE2, die zugeordnete Eingangskonstante EK2 und den Gangradsatz des eingelegten Gangs G2 bzw. G4 oder der Umkehrstufe R zu der Ausgangswelle GA, wobei das über das Planetengetriebe 9 übertragene Drehmoment durch ein entsprechendes, durch die Elektromaschine EM erzeugtes Drehmoment über das Sonnenrad S des Planetengetriebes 9 abgestützt werden muss.

Bei einer Übertragung eines Drehmomentes über den ersten Übertragungszweig kann die Elektromaschine EM bei einem eingelegten Gang des zweiten Übertragungszweiges bedarfsweise als Generator zum Laden eines elektrischen Energiespeichers oder als Motor zur Unterstützung des Verbrennungsmotors VM betrieben werden. Bei Hoch- und Rückschaltvorgängen wird jeweils zwischen beiden Übertragungszweigen gewechselt, wobei die Synchronisierung des einzulegenden Zielgangs und der Lastübergang von dem Übertragungszweig mit dem auszulegenden Lastgang zu dem Übertragungszweig mit dem einzulegenden Zielgang mittels der Elektromaschine EM gesteuert wird. Hierdurch laufen die Schaltvorgänge ohne Zugkraftunterbrechung ab. Aufgrund der Fremdsynchronisierung mittels der Elektromaschine EM können die Gangkupplungen der Gangradsätze als unsynchronisierte Klauenkupplungen ausgebildet sein, welches gegenüber synchronisierten Gangkupplungen mit Kosten- und Bauraumeinsparungen verbunden ist.

Im elektromotorischen Fahrbetrieb erfolgt die Kraftübertragung von der Elektromaschine EM in zwei zueinander parallelen Übertragungszweigen. Der erste Übertragungszweig verläuft von dem Sonnenrad S, über die Planetenräder P und das Hohlrad H des Planetengetriebes 9, weiter über die erste Eingangswelle GE1, die zugeordnete Eingangskonstante EK1 und den Gangradsatz des eingelegten Gangs G1 oder G3 zu der Ausgangswelle GA, bei eingelegtem fünften Gang G5 direkt von der ersten Eingangswelle GE1 zu der Ausgangswelle GA. Der zweite Übertragungszweig verläuft von dem Sonnenrad S, über die Planetenräder P und den Planetenträger PT des Planetengetriebes 9, weiter über die zweite Eingangswelle GE2, die zugeordnete Eingangskonstante EK2 und den Gangradsatz des eingelegten Gangs G2 bzw. G4 oder der Umkehrstufe R zu der Ausgangswelle GA.

Der elektromotorische Fahrbetrieb ist bevorzugt zum Anfahren vorgesehen, wobei sich die Auswahl der jeweils in beiden Übertragungszweigen eingelegten Gänge nach dem Lastzustand, wie dem Beladungszustand und der Fahrbahnneigung, richtet. Durch die Zuordnung des kleinsten Vorwärtsgangs G1 zu dem ersten Übertragungszweig und der Umkehrstufe R zu dem zweiten Übertragungszweig ergibt sich durch Einlegen dieser Gänge G1, R eine besonders hohe Übersetzung zwischen der Elektromaschine EM und der Ausgangswelle GA, wobei der Kraftfluss in beiden Übertragungszweigen von der Elektromaschine EM bzw. dem Sonnenrad S des Planetengetriebes 9 zu der Ausgangswelle GA verläuft und somit keine den Übertragungswirkungsgrad verschlechternde Blindleistung auftritt.

In Fig. 1 sind an den entsprechenden Baugruppen des Hybridantriebsstrangs 1.1 beispielhaft für einen Stadtbus geeignete Leistungsdaten und Drehzahlbereiche des Verbrennungsmotors VM und der Elektromaschine EM sowie Übersetzungswerte des Planetengetriebes 9, der beiden Eingangskonstanten EK1 und EK2 und der Gangradsätze angegeben. So kann der Verbrennungsmotor VM eine Leistung von 228 KW und ein maximales Drehmoment von 1400 Nm haben. Die Elektromaschine EM ist derart ausgebildet, dass diese eine Leistung von 100 KW und ein maximales Drehmoment von 500 Nm aufweist sowie in einem Drehzahlbereich von +/- 4000 Umdrehungen pro Minute betrieben werden kann. Die Standübersetzung des Planetengetriebes beträgt 3,0 und die Übersetzungswerte der Getriebegänge sind folgende: 2,4 beim 1. Gang; 1,94 beim 2. Gang; 0,96 beim 3. Gang; 0,82 beim 4. Gang; 1,0 beim 5. Gang; -0,88 bei der Umkehrstufe; 2,5 bei der Eingangskonstante EK1 und 1,28 bei der Eingangskonstante EK2.

In Fig. 2 ist in dem Hybridantriebsstrang 1.1 gemäß Fig. 1 für einen elektromotorischen Anfahrvorgang der Kraftfluss von der Elektromaschine EM zu der Ausgangswelle GA mit Pfeilen dargestellt. Zur Erzielung einer hohen Gesamtübersetzung sind die Gangkupplungen des der ersten Eingangswelle GE1 zugeordneten ersten Gangs G1 und der der zweiten Eingangswelle GE2 zugeordneten Umkehrstufe R geschlossen. Mit den Übersetzungswerten von Fig. 1 ergibt sich damit die wirksame Gesamtübersetzung zu

$$n_{EM}/n_{GA} = (1 + i_{St}) * i_{EK2} * i_R - i_{St} * i_{EK1} * i_{G1} = -22,5$$

wobei $n_{EM}$ für die Rotordrehzahl der Elektromaschine EM steht, $n_{GA}$ die Drehzahl der Getriebeausgangswelle GA ist, $i_{St}$ die Bezeichnung für die Standübersetzung des Schaltgetriebes ist, $i_{EK1}$ bzw. $i_{EK2}$ für die Übersetzung der Eingangskonstante EK1 bzw. EK2 steht, $i_R$ für die Übersetzung der Umkehrstufe steht und $i_{G1}$ den Wert der Übersetzung des Gangradsatzes des ersten Ganges G1 angibt.

Das negative Vorzeichen bedeutet, dass die Drehrichtungen des Rotors 6 der Elektromaschine EM und der Ausgangswelle GA des Schaltgetriebes 7 entgegengesetzt sind. Dies besagt, dass die Elektromaschine EM, bezogen auf die Drehrichtung der Triebwelle 4 des Verbrennungsmotors VM, bei einer Vorwärtsanfahrt rückwärts und bei einer Rückwärtsanfahrt vorwärts beschleunigt werden muss.

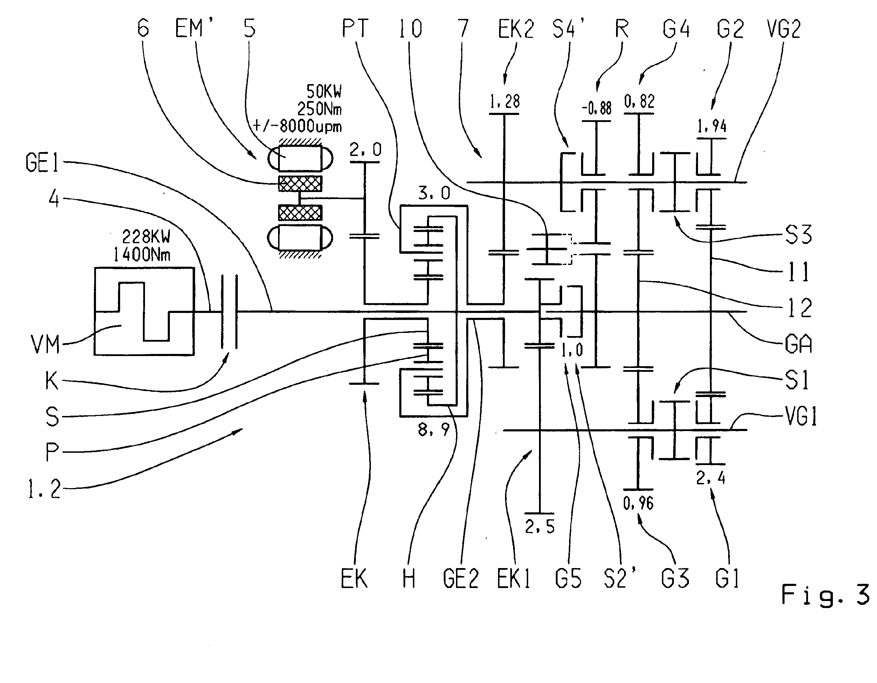

In der Ausführungsform des Hybridantriebsstrangs 1.2 gemäß Fig. 3 ist die Elektromaschine EM' im Unterschied zu der Ausführungsform nach Fig. 1 achsparallel neben der ersten Eingangswelle EG1 angeordnet, und der Rotor 6 der Elektromaschine EM' steht über eine aus einem Zahnradpaar gebildete Eingangskonstante EK mit der Übersetzung $i_{EK} = 2,0$ mit dem Sonnenrad S des Planetengetriebes 9 in Triebverbindung. Hierdurch kann die Elektromaschine EM' bei gleichzeitiger Verdoppelung des Drehzahlbereiches um die Hälfte drehmomentschwächer und entsprechend kleiner, leichter und kostengünstiger ausgeführt werden.

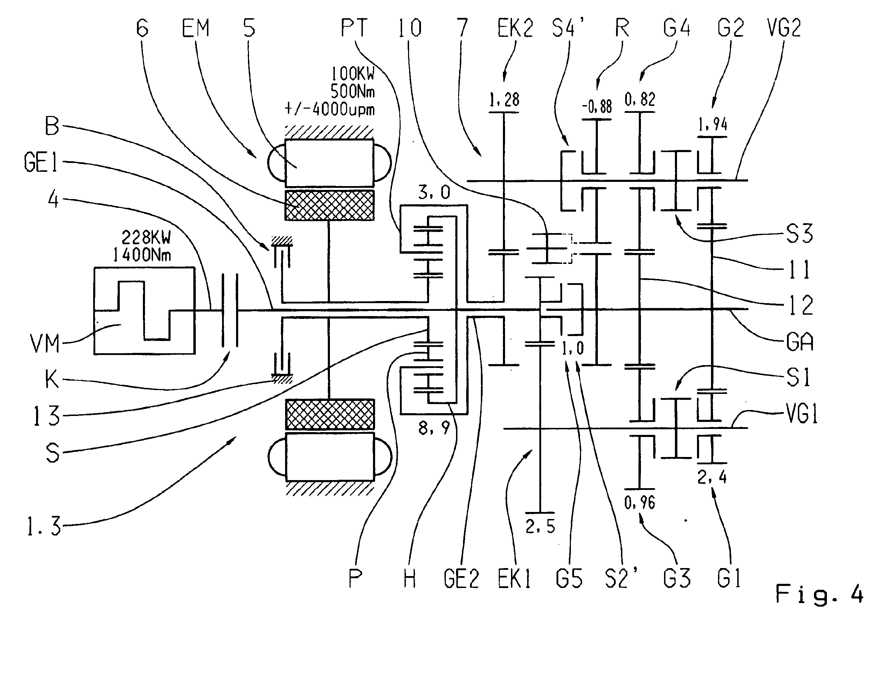

In der Ausführungsform des Hybridantriebsstrangs 1.3 gemäß Fig. 4 ist im Unterschied zu der Variante gemäß Fig. 1 zusätzlich eine Bremskupplung B vorgesehen, die zwischen einem gehäusefesten Bauteil zwischen dem Sonnenrad S des Planetengetriebes 9 bzw. dem Rotor 6 der Elektromaschine EM und einem gehäusefesten Bauteil 13 angeordnet ist. Die Bremskupplung B wird bevorzugt im verbrennungsmotorischen Fahrbetrieb bei einer stationären Drehmomentübertragung über den zweiten Übertragungszweig geschlossen, wodurch das Sonnenrad S mechanisch arretiert wird. Damit kann die elektromagnetische Abstützung des übertragenen Drehmomentes an dem Sonnenrad S über die Elektromaschine EM und die damit verbundene elektrische Verlustleistung vermieden werden.

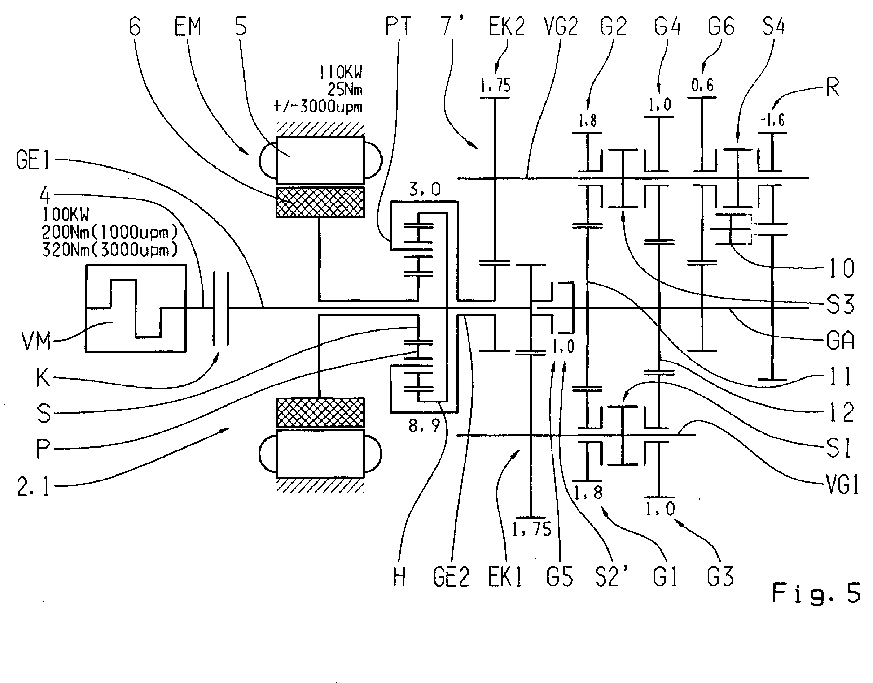

Eine zweite Ausführungsvarinate des erfindungsgemäßen Hybridantriebsstrangs 2.1 ist in schematischer Form in Fig. 5 abgebildet. Im Unterschied zu der ersten Ausführungsform nach Fig. 1 ist die Anordnung der Gangradsätze in dem Schaltgetriebe 7' axial umgekehrt. Zudem ist ein zusätzlicher Gangradsatz eines sechsten Gangs G6 vorgesehen, der zwischen der zweiten Vorgelegewelle VG2 und der Ausgangswelle GA axial zwischen den Gangradsätzen des vierten Gangs G4 und der Umkehrstufe R angeordnet ist. Das Festrad des sechsten Gangs G6 ist drehfest auf der Ausgangswelle GA angeordnet. Das Losrad des sechsten Gangs G6 ist drehbar auf der zweiten Vorgelegewelle VG2 gelagert und über eine zugeordnete Gangkupplung mit der zweiten Vorgelegewelle VG2 verbindbar. Die Gangkupplung des sechsten Gangs G6 ist mit der Gangkupplung der Umkehrstufe R in einem gemeinsamen Schaltpaket S4 zusammengefasst.

In Fig. 5 sind an den entsprechenden Baugruppen des Hybridantriebsstrangs 2.1 beispielhaft für einen Mittelklasse-Pkw geeignete Leistungsdaten des Verbrennungsmotors VM und der Elektromaschine EM, sowie Übersetzungswerte des Planetengetriebes 9, der Eingangskonstanten EK1, EK2 und der Gangradsätze angegeben. So kann der Verbrennungsmotor VM eine Leistung von 100 KW und ein maximales Drehmoment von 200 Nm bei 1000 Umdrehungen pro Minute bzw. 320 Nm bei 3000 Umdrehungen pro Minute haben. Die Elektromaschine EM ist derart ausgebildet, dass diese eine Leistung von 110 KW und ein maximales Drehmoment von 25 Nm aufweist sowie in einem Drehzahlbereich von +/- 3000 Umdrehungen pro Minute betrieben werden kann. Die Standübersetzung des Planetengetriebes beträgt 3,0 und die Übersetzungswerte der Getriebegänge sind folgende: 1,8 beim 1. Gang; 1,8 beim 2. Gang; 1,0 beim 3. Gang; 1,0 beim 4. Gang; 1,0 beim 5. Gang; 0,6 beim 6. Gang; -1,6 bei der Umkehrstufe; 1,75 bei der Eingangskonstante EK1 und 1,75 bei der Eingangskonstante EK2.

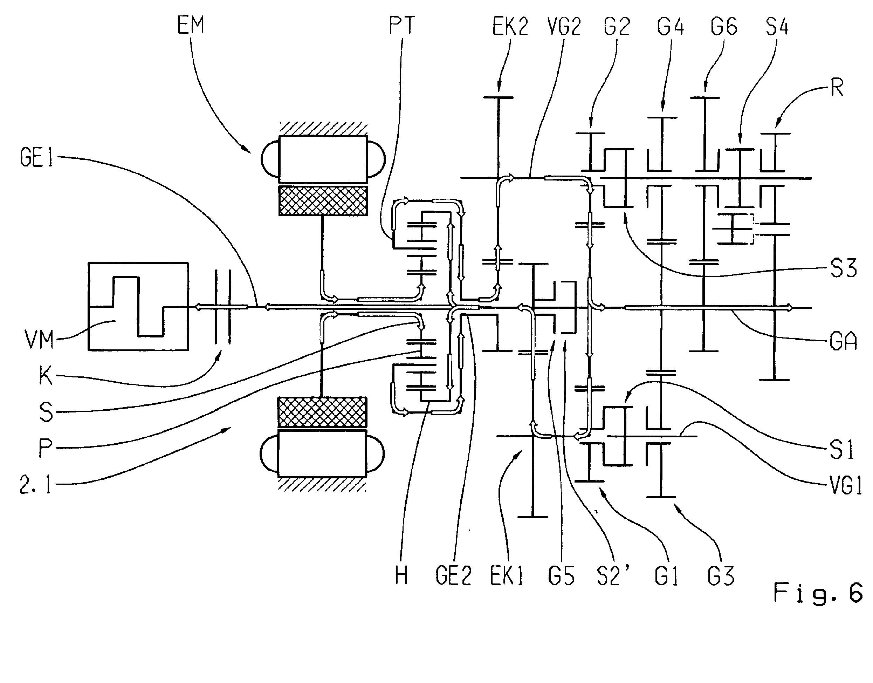

In Fig. 6 ist in dem Hybridantriebsstrang 2.1 gemäß Fig. 5 für einen Impulsstart des Verbrennungsmotors VM während eines elektromotorischen Anfahrvorgangs der Kraftfluss von der Elektromaschine EM zu der Ausgangswelle GA und zu der ersten Eingangswelle GE1 bzw. der Trennkupplung K mit Pfeilen dargestellt. Ein wesentlicher Kraftfluss erfolgt dabei über die Planetenräder P und den Planetenträger PT des Planetengetriebes 9, die zweite Eingangswelle GE2, die zweite Eingangskonstante EK2, die zweite Vorgelegewelle VG2 und den Gangradsatz des eingelegten zweiten Gangs G2 zu der Ausgangswelle GA. Der größte Teil dieses Drehmomentes wird über den Gangradsatz des eingelegten ersten Gangs G1, der zweiten Vorgelegewelle VG1 und die erste Eingangskonstante EK1 in die erste Eingangswelle GE1 geführt und dort in ein für das Momentengleichgewicht des Planetengetriebes 9 erforderliches Teilmoment im Hohlrad H des Planetengetriebes 9 sowie ein über die Trennkupplung K für den Impulsstart des Verbrennungsmotors VM übertragenes Teilmoment aufgeteilt wird. Bei einem größeren, für den Impulsstart des Verbrennungsmotors VM erforderlichen Drehmoment kann ein größerer Drehmomentanteil unter Verzögerung des Kraftfahrzeugs über die Ausgangswelle GA aus dem resultierenden Trägheitsmoment des Fahrzeuggewichts sowie der rotierenden Massen des Antriebsstranges gezogen werden und über den Rückkopplungszweig in die erste Eingangswelle EG1 geleitet werden.

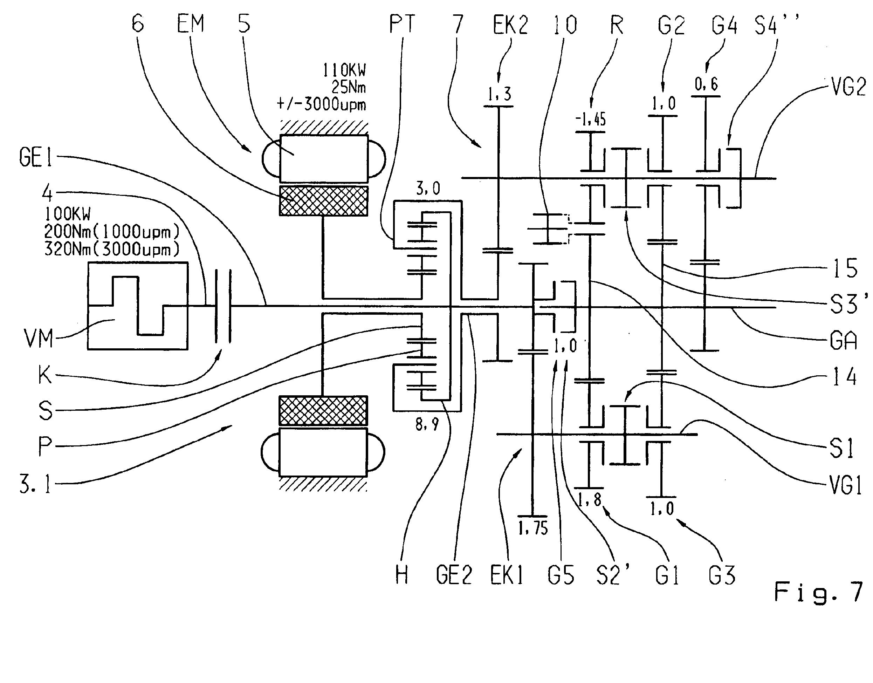

Eine dritte Ausführungsform des erfindungsgemäßen Hybridantriebsstrangs 3.1 ist in schematischer Form in Fig. 7 abgebildet. Der geometrische Aufbau dieser Variante entspricht weitgehend demjenigen der ersten Ausführung gemäß Fig. 1. Im Unterschied dazu sind jedoch vorliegend die Gangradsätze der Vorwärtsgänge G1, G3 und G2, G4 jeweils axial vertauscht angeordnet, die Gangkupplungen des zweiten Gangs G2 und der Umkehrstufe R in einem gemeinsamen Schaltpaket S3' zusammengefasst, und die Gangkupplung S4" des vierten Gangs G4 separat angeordnet. Zudem sind nunmehr die Gangradsätze des ersten Gangs G1 und der Umkehrstufe R sowie die Gangradsätze des zweiten Gangs G2 und des dritten Gangs G3 jeweils an derselben Axialposition angeordnet und weisen jeweils ein gemeinsames Festrad 14 bzw. 15 auf.

Die an den entsprechenden Baugruppen des Hybridantriebsstrangs 3.1 angegebenen Leistungsdaten des Verbrennungsmotors VM und der Elektromaschine EM sowie die Übersetzungswerte des Planetengetriebes 9, der Eingangskonstanten EK1, EK2 und der Gangradsätze entsprechen jedoch wie in Fig. 5 denjenigen eines Mittelklasse-Pkw. So kann der Verbrennungsmotor VM eine Leistung von 100 KW und ein maximales Drehmoment von 200 Nm bei 1 000 Umdrehungen pro Minute bzw. 320 Nm bei 3 000 Umdrehungen pro Minute haben. Die Elektromaschine EM ist derart ausgebildet, dass diese eine Leistung von 110 KW und ein maximales Drehmoment von 25 Nm aufweist sowie in einem Drehzahlbereich von +/-3 000 Umdrehungen pro Minute betrieben werden kann. Die Standübersetzung des Planetengetriebes beträgt 3,0 und die Übersetzungswerte der Getriebegänge sind folgende: 1,8 beim 1. Gang; 1,0 beim 2. Gang; 1,0 beim 3. Gang; 0,6 beim 4. Gang; 1,0 beim 5. Gang; -1,45 bei der Umkehrstufe R; 1,75 bei der Eingangskonstante EK1 und 1,3 bei der Eingangskonstante EK2.

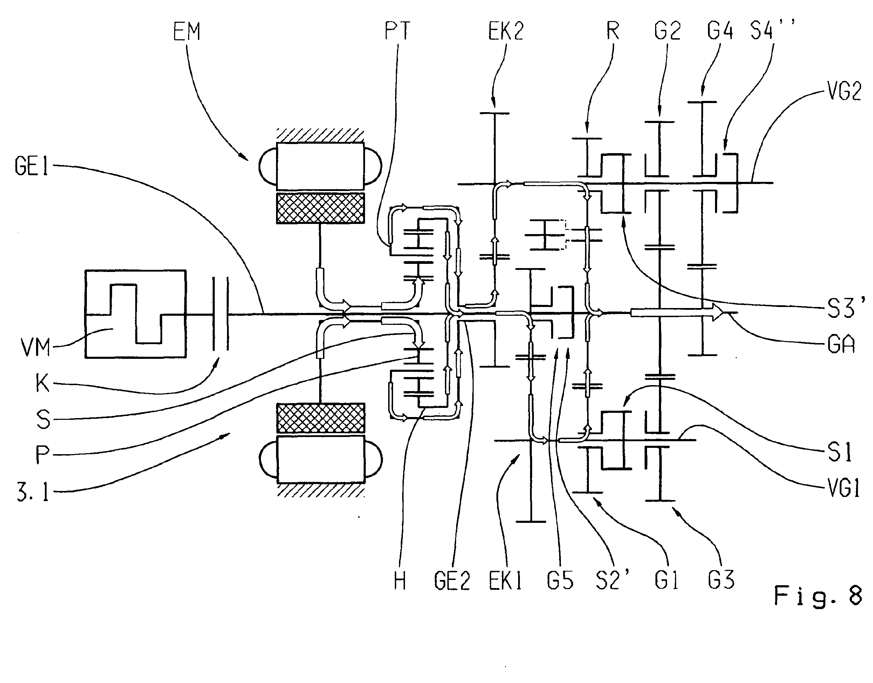

In Fig. 8 ist in dem Hybridantriebsstrang 3.1 gemäß Fig. 7 für einen elektromotorischen Anfahrvorgang der Kraftfluss von der Elektromaschine EM zu der Ausgangswelle GA mit Pfeilen dargestellt. Zur Erzielung einer hohen Gesamtübersetzung sind analog zu Fig. 2 die Gangkupplungen des der ersten Eingangswelle GE1 zugeordneten ersten Ganges G1 und der der zweiten Eingangswelle GE2 zugeordneten Umkehrstufe R geschlossen. Mit den Übersetzungswerten von Fig. 7 ergibt sich damit die wirksame Gesamtübersetzung zu

$$n_{EM}/n_{GA} = (1 + i_{St}) * i_{EK2} * i_R - i_{St} * i_{EK1} * i_{G1} = -17,0,$$

wobei die Elektromaschine EM, bezogen auf die Drehrichtung der Triebwelle 4 des Verbrennungsmotors VM, bei einer Vorwärtsanfahrt rückwärts und bei einer Rückwärtsanfahrt vorwärts dreht.

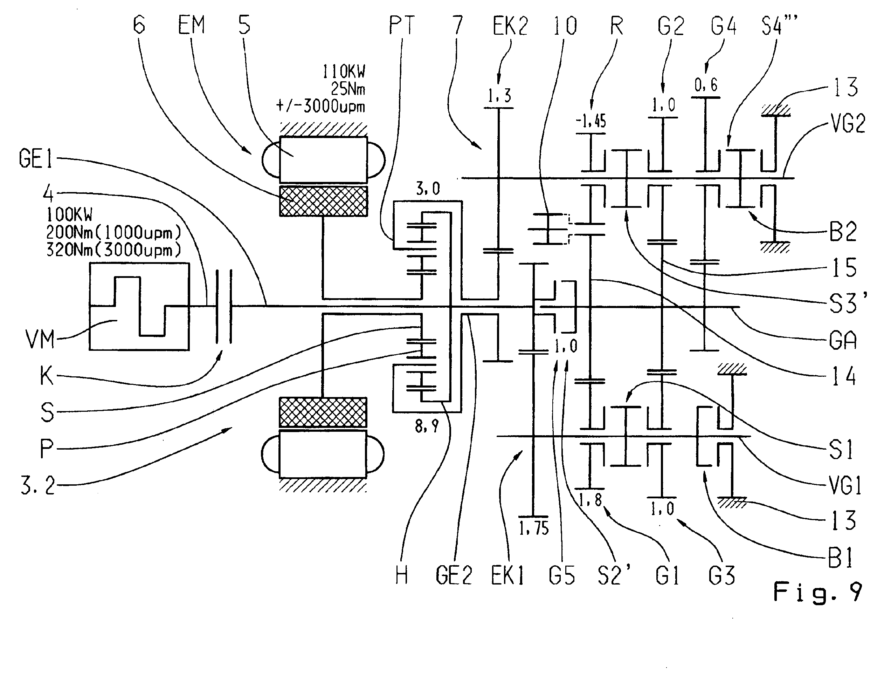

In der Ausführungsform des Hybridantriebsstrangs 3.2 gemäß Fig. 9 ist im Unterschied zu der Variante nach Fig. 7 zusätzlich an jeder der beiden Vorgelegewellen VG1, VG2 jeweils eine Bremskupplung B1, B2 angeordnet, durch welche die betreffende Vorgelegewelle VG1, VG2 jeweils gegenüber einem gehäusefesten Bauteil 13 arretierbar ist. Die Bremskupplungen B1, B2 sind in Aufbau und Anordnung baugleich zu den Gangkupplungen der Gänge G1 bis G6 und der Umkehrstufe R ausgebildet sowie steuerungstechnisch in die Betätigung der Gangkupplungen eingebunden. Die zweite Bremskupplung B2 ist auf der zweiten Vorgelegewelle VG2 angeordnet und mit der Gangkupplung des vierten Gangs G4 in einem gemeinsamen Schaltpaket S4''' zusammengefasst, wogegen die Bremskupplung B1 separat auf der ersten Vorgelegewelle VG1 angeordnet ist. Die beiden Bremskupplungen B1, B2 werden bevorzugt im elektromotorischen Fahrbetrieb wechselweise zur Abstützung eines über die jeweils andere Eingangswelle GE1, GE2 bzw. Vorgelegewelle VG1, VG2 übertragenen Drehmomentes geschlossen, wodurch jeweils entweder das Hohlrad H oder der Planetenträger PT des Planetengetriebes 9 mechanisch arretiert ist. Hierdurch wird Energie zur gegenseitigen Abstützung in dem Planetengetriebe 9 eingespart und die damit verbundene Blindleistung vermieden.

Bezugszeichen

| | |
|---|---|
| 1.1 | Hybridantriebsstrang |
| 1.2 | Hybridantriebsstrang |
| 1.3 | Hybridantriebsstrang |
| 2.1 | Hybridantriebsstrang |
| 3.1 | Hybridantriebsstrang |
| 3.2 | Hybridantriebsstrang |
| 4 | Triebwelle |

| | |
|---|---|
| 5 | Stator |
| 6 | Rotor |
| 7 | Schaltgetriebe |
| 7' | Schaltgetriebe |
| 8 | Differenzialgetriebe |
| 9 | Planetengetriebe |
| 10 | Zwischenrad |
| 11 | Festrad |
| 12 | Festrad |
| 13 | Gehäusefestes Bauteil |
| 14 | Festrad |
| 15 | Festrad |

| | |
|---|---|
| B | Bremskupplung von EM |
| B1 | erste Bremskupplung von VG1 |
| B2 | zweite Bremskupplung von VG2 |
| EK | Eingangskonstante von EM |
| EK1 | erste Eingangskonstante vom Stator, VG1 |
| EK2 | zweite Eingangskonstante vom Stator, VG2 |
| EM | Elektromaschine |
| EM' | Elektromaschine |
| G1 - G6 | (Vorwärts-)Gang |
| GA | Ausgangswelle vom Stator |
| GE1 | erste Eingangswelle vom Stator, VG1 |
| GE2 | zweite Eingangswelle vom Stator, VG2 |
| H | Hohlrad vom Schaltgetriebe |
| i | Übersetzung |
| $i_{EK}$ | Übersetzung von EK |
| $i_{EK1}$ | Übersetzung von EK1 |
| $i_{EK2}$ | Übersetzung von EK2 |
| $i_{G1*}$ | Übersetzung eines Gangradsatzes von GE1 |
| $i_{G2*}$ | Übersetzung eines Gangradsatzes von GE2 |
| $i_{G1}$ | Übersetzung des Gangradsatzes von G1 |
| $i_{G2}$ | Übersetzung des Gangradsatzes von G2 |
| $i_{G3}$ | Übersetzung des Gangradsatzes von G3 |
| $i_{G4}$ | Übersetzung des Gangradsatzes von G4 |
| $i_{G5}$ | Übersetzung von G5 |
| $i_{G6}$ | Übersetzung des Gangradsatzes von G6 |
| $i_R$ | Übersetzung des Gangradsatzes von R |
| $i_{St}$ | Standübersetzung vom Schaltgetriebe |
| K | Trennkupplung |
| $M_{EM}$ | Drehmoment von EM |
| $M_{EM\_max}$ | Maximales Drehmoment von EM |
| $M_{VM}$ | Drehmoment von VM |
| $M_{VM\_max}$ | Maximales Drehmoment von VM |
| n | Drehzahl |
| $n_{EM}$ | Drehzahl von EM |
| $n_{GA}$ | Drehzahl von GA |
| $n_H$ | Drehzahl von H |
| $n_{PT}$ | Drehzahl von PT |
| $n_S$ | Drehzahl von S |
| P | Planetenrad vom Schaltgetriebe |
| PT | Planetenträger vom Schaltgetriebe |
| R | Umkehrstufe |
| S | Sonnenrad vom Schaltgetriebe |
| S1 | Schaltpaket |
| S2' | Gangkupplung |
| S3 | Schaltpaket |

| | |
|---|---|
| S3' | Schaltpaket |
| S4 | Schaltpaket |
| S4' | Gangkupplung |
| S4" | Gangkupplung |
| S4''' | Schaltpaket |
| VG1 | erste Vorgelegewelle vom Stator |
| VG2 | zweite Vorgelegewelle vom Stator |
| VM | Verbrennungsmotor |

**Patentansprüche**

1. Hybridantriebsstrang eines Kraftfahrzeugs, der einen Verbrennungsmotor (VM) mit einer Triebwelle (4), eine als Motor und als Generator betreibbare Elektromaschine (EM) mit einem Rotor (6), ein mehrstufiges Schaltgetriebe (7) mit zwei Eingangswellen (GE1, GE2) und einer Ausgangswelle (GA) sowie ein Differenzialgetriebe (8) aufweist, wobei zumindest eine der Eingangswellen (GE1) über eine zugeordnete Trennkupplung (K) mit der Triebwelle (4) verbindbar ist, beide Eingangswellen (GE1, GE2) über wechselweise zugeordnete Gangradsätze unterschiedlicher Übersetzung und jeweils eine zugeordnete Gangkupplung selektiv mit der Ausgangswelle (GA) verbindbar sind, und das Differenzialgetriebe (8) als ein einfaches Planetengetriebe (9) ausgebildet ist, welches koaxial über der ersten Eingangswelle (GE1) angeordnet ist, dessen Hohlrad (H) drehfest mit der einen Eingangswelle (GE1) verbunden ist, dessen Planetenträger (PT) drehfest mit der anderen Eingangswelle (GE2) verbunden ist, und dessen Sonnenrad (S) mit dem Rotor (6) in Triebverbindung steht, **dadurch gekennzeichnet, dass** nur die mit dem Hohlrad (H) drehfest verbundene erste Eingangswelle (GE1) über eine Trennkupplung (K) mit der Triebwelle (4) verbindbar ist, und dass das Schaltgetriebe (7) als ein Vorgelegegetriebe mit einer koaxial geschachtelten Anordnung der beiden Eingangswellen (GE1, GE2), mit einer dazu koaxial benachbarten Anordnung der Ausgangswelle (GA) und mit zwei jeweils über eine Eingangskonstante (EK1, EK2) mit einer der beiden Eingangswellen (GE1, GE2) in Triebverbindung stehenden Vorgelegewellen (VG1, VG2) ausgebildet ist, dessen Gangradsätze in wechselweiser Zuordnung jeweils an der ersten Vorgelegewelle (VG1) und an der Ausgangswelle (GA) sowie an der zweiten Vorgelegewelle (VG2) und an der Ausgangswelle (GA) angeordnet sind.

2. Hybridantriebsstrang nach Anspruch 1, **dadurch gekennzeichnet, dass** die Elektromaschine (EM) koaxial über der ersten Eingangswelle (GE1) angeordnet ist, und der Rotor (6) der Elektromaschine (EM) unmittelbar mit dem Sonnenrad (S) des Planetengetriebes (9) drehfest verbunden ist.

3. Hybridantriebsstrang nach Anspruch 2, **dadurch gekennzeichnet, dass** die Elektromaschine (EM) ein maximales Drehmoment ($M_{EM\_max}$) aufweist, das mindestens dem mit der Standübersetzung ($i_{St}$) des Planetengetriebes (9) gebildeten Teil des maximalen Drehmomentes ($M_{VM\_max}$) des Verbrennungsmotors (VM) entspricht ($M_{EM\_max} >= 1/i_{St} * M_{VM\_max}$).

4. Hybridantriebsstrang nach Anspruch 1, **dadurch gekennzeichnet, dass** die Elektromaschine (EM') achsparallel benachbart zu der ersten Eingangswelle (GE1) angeordnet ist, und der Rotor (6) der Elektromaschine (EM') über eine Eingangskonstante (EK) mit einer Übersetzung ($i_{EK}$) größer als Eins ($i_{EK} > 1,0$) mit dem Sonnenrad (S) des Planetengetriebes (9) in Triebverbindung steht.

5. Hybridantriebsstrang nach Anspruch 4, **dadurch gekennzeichnet, dass** die Elektromaschine (EM') ein maximales Drehmoment ($M_{EM\_max}$) aufweist, das mindestens dem mit dem Produkt der Übersetzung ($i_{EK}$) der Eingangskonstanten (EK) der Elektromaschine (EM) und der Standübersetzung ($i_{St}$) des Planetengetriebes (9) gebildeten Teil des maximalen Drehmomentes ($M_{VM\_max}$) des Verbrennungsmotors (VM) entspricht ($M_{EM\_max} >= 1/(i_{EK} * i_{St}) * M_{VM\_max}$).

6. Hybridantriebsstrang nach zumindest einem der Ansprüche 1 bis 5, **dadurch gekennzeichnet, dass** zur stationären Abstützung eines übertragenen Drehmomentes eine steuerbare Bremskupplung (B) zwischen dem Sonnenrad (S) des Planetengetriebes (9) oder dem Rotor (6) der Elektromaschine (EM) und einem gehäusefesten Bauteil (13) angeordnet ist.

7. Hybridantriebsstrang nach zumindest einem der Ansprüche 1 bis 6, **dadurch gekennzeichnet, dass** die Gangradsätze der ungeraden Gänge (G1, G3, G5) an der ersten Vorgelegewelle (VG1) und an der Ausgangswelle (GA) sowie die Gangradsätze der geraden Gänge (G2, G4) und einer Umkehrstufe (R) an der zweiten Vorgelegewelle (VG2) und an der Ausgangswelle (GA) angeordnet sind.

8. Hybridantriebsstrang nach zumindest einem der Ansprüche 1 bis 7, **dadurch gekennzeichnet, dass** die Eingangskonstanten (EK1, EK2) der beiden Vorgelegewellen (VG1, VG2) jeweils eine Übersetzung ($i_{EK1}$, $i_{EK2}$) größer als Eins aufweisen ($i_{EK1} > 1,0$; $i_{EK2} > 1,0$).

9. Hybridantriebsstrang nach zumindest einem der Ansprüche 1 bis 8, **dadurch gekennzeichnet, dass** die Gangradsätze jeweils aus einem drehfest mit der Ausgangswelle (GA) verbundenen Festrad und einem drehbar auf der zugeordneten Vorgelegewelle (VG1, VG2) gelagerten Losrad gebildet sind, und dass die Losräder jeweils über eine zugeordnete Gangkupplung mit der zugeordneten Vorgelegewelle (VG1, VG2) verbindbar sind, wobei Gangkupplungen jeweils paarweise in gemeinsamen Schaltpaketen (S1, S3, S3', S4) zusammengefasst sind.

10. Hybridantriebsstrang nach zumindest einem der Ansprüche 1 bis 9, **dadurch gekennzeichnet, dass** mindestens ein an der ersten Vorgelegewelle (VG1) und an der Ausgangswelle (GA) angeordneter Gangradsatz sowie ein an der zweiten Vorgelegewelle (VG2) und an der Ausgangswelle (GA) angeordneter Gangradsatz in derselben Axialposition angeordnet sind sowie ein gemeinsames Festrad (11, 12, 14) aufweisen.

11. Hybridantriebsstrang nach zumindest einem der Ansprüche 1 bis 10, **dadurch gekennzeichnet, dass** eine direkte Gangkupplung (S2') zwischen einer der beiden Eingangswellen (GE1, GE2) und der Ausgangswelle (GA) angeordnet ist.

12. Hybridantriebsstrang nach zumindest einem der Ansprüche 1 bis 11, **dadurch gekennzeichnet, dass** zur Abstützung eines über die jeweils andere Eingangswelle (GE1, GE2) übertragenen Drehmomentes an beiden Vorgelegewellen (VG1, VG2) jeweils eine steuerbare Bremskupplung (B1, B2) zur Verbindung mit einem gehäusefesten Bauteil (13) angeordnet ist.

13. Hybridantriebsstrang nach Anspruch 12, **dadurch gekennzeichnet, dass** die Bremskupplungen (B1, B2) in Aufbau und Anordnung baugleich wie die Gangkupplungen ausgebildet und steuerungstechnisch in die Betätigung der Gangkupplungen eingebunden sind.

14. Verfahren zur Steuerung eines Hybridantriebsstrangs nach zumindest einem der Ansprüche 1 bis 13, **dadurch gekennzeichnet, dass** zum elektromotorischen Anfahren die Trennkupplung (K) geöffnet wird, dass eine Gangkupplung eines der ersten Eingangswelle (GE1) zugeordneten Gangs und eine Gangkupplung eines der zweiten Eingangswelle (GE2) zugeordneten Gangs geschlossen werden, und dass danach der Rotor (6) der Elektromaschine (EM) im motorischen Betrieb beschleunigt wird.

15. Verfahren nach Anspruch 14, **dadurch gekennzeichnet, dass** die Auswahl der beiden einzulegenden Gänge in Abhängigkeit von der Anfahrlast erfolgt.

16. Verfahren nach Anspruch 15, **dadurch gekennzeichnet, dass** bei hoher Anfahrlast die Gangkupplung des kleinsten Gangs (G1) der ersten Eingangswelle (GE1) und die Gangkupplung der Umkehrstufe (R) der zweiten Eingangswelle (GE2) geschlossen werden, und dass der Rotor (6) der Elektromaschine (EM), bezogen auf die Drehrichtung der Triebwelle (4) des Verbrennungsmotors (VM), bei einer Vorwärtsanfahrt rückwärts und bei einer Rückwärtsanfahrt vorwärts beschleunigt wird.

17. Verfahren nach Anspruch 15, **dadurch gekennzeichnet, dass** bei mittlerer Anfahrlast die Gangkupplung des kleinsten Gangs (G1) der ersten Eingangswelle (GE1) und die Gangkupplung des größten Gangs (G4) der zweiten Eingangswelle (GE2) geschlossen werden, und dass der Rotor (6) der Elektromaschine (EM), bezogen auf die Drehrichtung der Triebwelle (4) des Verbrennungsmotors (VM), bei einer Vorwärtsanfahrt rückwärts und bei einer Rückwärtsanfahrt vorwärts beschleunigt wird.

18. Verfahren nach Anspruch 15, **dadurch gekennzeichnet, dass** bei niedriger Anfahrlast die Gangkupplung (S2') des größten Gangs (G5) der ersten Eingangswelle (GE1) und die Gangkupplung des kleinsten Gangs (G2) der zweiten Eingangswelle (GE2) geschlossen werden, und dass der Rotor (6) der Elektromaschine (EM), bezogen auf die Drehrichtung der Triebwelle (4) des Verbrennungsmotors (VM), bei einer Vorwärtsanfahrt vorwärts und bei einer Rückwärtsanfahrt rückwärts beschleunigt wird.

19. Verfahren nach zumindest einem der Ansprüche 14 bis 18, **dadurch gekennzeichnet, dass** anstelle einer Gangkupplung der ersten Eingangswelle (GE1) eine der ersten Eingangswelle (GE1) zugeordnete Bremskupplung (B1) geschlossen wird, oder anstelle einer Gangkupplung der zweiten Eingangswelle (GE2) eine der zweiten Eingangswelle (GE2) zugeordnete Bremskupplung (B2) geschlossen wird.

20. Verfahren nach zumindest einem der Ansprüche 14 bis 19, **dadurch gekennzeichnet, dass** die Elektromaschine (EM) bei laufendem Verbrennungsmotor (VM) durch ein zumindest teilweises Schließen der Trennkupplung (K) von dem Verbrennungsmotor (VM) antriebstechnisch unterstützt wird.

21. Verfahren nach zumindest einem der Ansprüche 14 bis 20, **dadurch gekennzeichnet, dass** bei abgestelltem Verbrennungsmotor (VM) mit dem Erreichen oder Überschreiten einer vorbestimmten Mindestdrehzahl des Verbrennungsmotors (VM) an der ersten Eingangswelle (GE1) der Verbrennungsmotor (VM) durch das Schließen der Trennkupplung (K) impulsgestartet wird.

22. Verfahren nach zumindest einem der Ansprüche 14 bis 21, **dadurch gekennzeichnet, dass** eine Lastübernahme durch den Verbrennungsmotor (VM) **dadurch** erfolgt, dass mit dem Erreichen der vorbestimmten Drehzahl des Verbrennungsmotors (VM) durch die erste Eingangswelle (GE1) die Trennkupplung (K) geschlossen wird, und dass zeitlich überschnitten das Drehmoment des Verbrennungsmotors (VM) erhöht sowie das Drehmoment der Elektromaschine (EM) reduziert wird.

23. Verfahren nach zumindest einem der Ansprüche 14 bis 22, **dadurch gekennzeichnet, dass** zur stationären Abstützung eines über die zweite Eingangswelle (GE2) übertragenen Drehmomentes eine der Elektromaschine (EM) zugeordnete Bremskupplung (B) geschlossen wird.

24. Verfahren zur Steuerung eines Hybridantriebsstrangs nach zumindest einem der Ansprüche 1 bis 13, **dadurch gekennzeichnet, dass** zum verbrennungsmotorischen Anfahren nach dem Starten des Verbrennungsmotors (VM) bei einer Vorwärtsanfahrt die Gangkupplung des kleinsten Gangs (G2) der zweiten Eingangswelle und bei einer Rückwärtsanfahrt die Gangkupplung der Umkehrstufe (R) der zweiten Eingangswelle geschlossen wird, dass nachfolgend die Trennkupplung (K) geschlossen wird, und dass danach die Elektromaschine (EM) im generatorischen Betrieb unter gleichzeitiger Erhöhung des Drehmomentes des Verbrennungsmotors (VM) und des generatorischen Drehmomentes der Elektromaschine (EM) bis zum Stillstand der Elektromaschine (EM) verzögert wird.

25. Verfahren nach Anspruch 24, **dadurch gekennzeichnet, dass** die Elektromaschine (EM) im motorischen Betrieb weiter beschleunigt wird, bis an der Gangkupplung des nächsthöheren Gangs (G3) der ersten Eingangswelle (GE1) Synchronlauf erreicht ist, dass dann die betreffende Gangkupplung des Gangs (G3) geschlossen wird, und dass anschließend die Elektromaschine (EM) kraftlos geschaltet sowie die Gangkupplung des kleinsten Gangs (G2) der zweiten Eingangswelle (GE2) geöffnet wird.

26. Verfahren nach zumindest einem der Ansprüche 14 bis 25, **dadurch gekennzeichnet, dass** im verbrennungsmotorischen Fahrbetrieb bei einem Gangwechsel von einem Lastgang (G3) der ersten Eingangswelle (GE1) in einen Zielgang (G4) der zweiten Eingangswelle (GE2) zuerst die Vorgelegewelle (GV2) des Zielgangs mittels der Elektromaschine (EM) bis zum Erreichen der Synchrondrehzahl an der Gangkupplung des Zielgangs (G4) beschleunigt wird, dass dann die Gangkupplung des Zielgangs (G4) geschlossen wird, und dass anschließend das Stützmoment der Elektromaschine (EM) soweit erhöht wird, bis die Gangkupplung des Lastgangs (G3) lastfrei geöffnet werden kann.

27. Verfahren nach zumindest einem der Ansprüche 14 bis 26, **dadurch gekennzeichnet, dass** im verbrennungsmotorischen Fahrbetrieb bei einem Gangwechsel von einem Lastgang (G4) der zweiten Eingangswelle (GE2) in einen Zielgang (G3, G5) der ersten Eingangswelle (GE1) zunächst die Vorgelegewelle (GE1) des Zielgangs (G3, G5) bis zum Erreichen der Synchrondrehzahl an der Gangkupplung des Zielgangs (G3, G5) bei einer Hochschaltung durch eine Erhöhung des Stützmomentes der Elektromaschine (EM) verzögert und bei einer Rückschaltung durch eine Verringerung des Stützmomentes der Elektromaschine (EM) beschleunigt wird, dass dann die Gangkupplung des Zielgangs (G3, G5) geschlossen wird, und dass anschließend die Elektromaschine (EM) lastfrei geschaltet und die Gangkupplung des Lastgangs (G4) geöffnet wird.

**Claims**

1. Hybrid drivetrain of a motor vehicle, which hybrid drivetrain has an internal combustion engine (VM) having a propeller shaft (4), an electric machine (EM) which can be operated as a motor and as a generator and which has a rotor (6), a multi-stage shift transmission (7) having two input shafts (GE1, GE2) and an output shaft (GA), and also a differential gearing (8), with at least one of the input shafts (GE1) being connectable to the propeller shaft (4) by means of an associated separating clutch (K), with both input shafts (GE1, GE2) being selectively connectable to the output shaft (GA) by means of alternately assigned gearwheel sets of different transmission ratio and in each case one associated gear clutch, and with the differential gearing (8) being designed as a single planetary gear set (9) which is arranged coaxially over the first input shaft (GE1) and whose internal gear (H) is connected to the one input shaft (GE1) for conjoint rotation therewith, whose planet carrier (PT) is connected to the other input shaft (GE2) for conjoint rotation therewith, and whose sun gear (S) is drive-connected to the rotor (6), **characterized in that** only the first input shaft (GE1), which is connected to the internal gear (H) for conjoint rotation therewith, can be connected to the propeller shaft (4) by means of a separating clutch (K), and **in that** the shift transmission (7) is designed as a countershaft transmission having a coaxially nested arrangement of the two input shafts (GE1, GE2), having an arrangement of the output shaft (GA) coaxially adjacent thereto and having two countershafts (VG1, VG2) which are drive-connected to one of the two input shafts (GE1, GE2) in each case by means of an input constant (EK1, EK2), the gearwheel sets of which countershafts are arranged in alternating assignment in each case on the first countershaft (VG1) and on the output shaft (GA) and also on the second countershaft (VG2) and on the output shaft (GA).

2.  Hybrid drivetrain according to Claim 1, **characterized in that** the electric machine (EM) is arranged coaxially over the first input shaft (GE1), and the rotor (6) of the electric machine (EM) is directly connected to the sun gear (S) of the planetary gear set (9) for conjoint rotation therewith.

3.  Hybrid drivetrain according to Claim 2, **characterized in that** the electric machine (EM) has a maximum torque ($M_{EM\_max}$) which corresponds at least to that part of the maximum torque ($M_{VM\_max}$) of the internal combustion engine (VM) formed with the stationary transmission ratio ($i_{St}$) of the planetary gear set (9) ($M_{EM\_max} >= 1/i_{St} * M_{VM\_max}$).

4.  Hybrid drivetrain according to Claim 1, **characterized in that** the electric machine (EM') is arranged axially parallel and adjacent to the first input shaft (GE1), and the rotor (6) of the electric machine (EM') is drive-connected to the sun gear (S) of the planetary gear set (9) via an input constant (EK) with a transmission ratio ($i_{EK}$) of greater than one ($i_{EK} > 1.0$).

5.  Hybrid drivetrain according to Claim 4, **characterized in that** the electric machine (EM') has a maximum torque ($M_{EM\_max}$) which corresponds at least to that part of the maximum torque ($M_{VM\_max}$) of the internal combustion engine (VM) formed with the product of the transmission ratio ($i_{EK}$) of the input constants (EK) of the electric machine (EM) and the stationary transmission ratio ($i_{St}$) of the planetary gear set (9) ($M_{EM\_max} >= 1/(i_{EK} * i_{St}) * M_{VM\_max}$).

6.  Hybrid drivetrain according to at least one of Claims 1 to 5, **characterized in that**, for the stationary support of a transmitted torque, a controllable brake clutch (B) is arranged between the sun gear (S) of the planetary gear set (9) or the rotor (6) of the electric machine (EM) and a component (13) which is fixed with respect to the housing.

7.  Hybrid drivetrain according to at least one of Claims 1 to 6, **characterized in that** the gearwheel sets of the odd-numbered gears (G1, G3, G5) are arranged on the first countershaft (VG1) and on the output shaft (GA), and the gearwheel sets of the even-numbered gears (G2, G4) and of a reverse stage (R) are arranged on the second countershaft (VG2) and on the output shaft (GA).

8.  Hybrid drivetrain according to at least one of Claims 1 to 7, **characterized in that** the input constants (EK1, EK2) of the two countershafts (VG1, VG2) have in each case a transmission ratio ($I_{EK1}, i_{EK2}$) of greater than one ($i_{EK1} > 1.0; i_{EK2} > 1.0$).

9.  Hybrid drivetrain according to at least one of Claims 1 to 8, **characterized in that** the gearwheel sets are formed in each case from a fixed wheel, which is connected to the output shaft (GA) for conjoint rotation therewith, and a loose wheel which is rotatably mounted on the associated countershaft (VG1, VG2), and **in that** the loose wheels can be connected to the associated countershaft (VG1, VG2) in each case by means of an associated gear clutch, with gear clutches being combined in each case in pairs in common shift packs (S1, S3, S3', S4).

10. Hybrid drivetrain according to at least one of Claims 1 to 9, **characterized in that** at least one gearwheel set arranged on the first countershaft (VG1) and on the output shaft (GA) and one gearwheel set arranged on the second countershaft (VG2) and on the output shaft (GA) are arranged in the same axial position and have a common fixed wheel (11, 12, 14).

11. Hybrid drivetrain according to at least one of Claims 1 to 10, **characterized in that** a direct gear clutch (S2') is arranged between one of the two input shafts (GE1, GE2) and the output shaft (GA).

12. Hybrid drivetrain according to at least one of Claims 1 to 11, **characterized in that**, to support a torque transmitted via the in each case other input shaft (GE1, GE2), in each case one controllable brake clutch (B1, B2) for connecting to a component (13) which is fixed with respect to the housing is arranged on both countershafts (VG1, VG2).

13. Hybrid drivetrain according to Claim 12, **characterized in that** the brake clutches (B1, B2) are identical in terms of design and arrangement to the gear clutches, and are incorporated in terms of control in the actuation of the gear clutches.

14. Method for controlling a hybrid drivetrain according to at least one of Claims 1 to 13, **characterized in that**, for starting by means of the electric motor, the separating clutch (K) is opened, **in that** a gear clutch of a gear assigned to the first input shaft (GE1) and a gear clutch of a gear assigned to the second input shaft (GE2) are closed, and **in that** subsequently, the rotor (6) of the electric machine (EM) is accelerated in motor operation.

15. Method according to Claim 14, **characterized in that** the selection of the two gears to be engaged takes place as a function of the starting load.

16. Method according to Claim 15, **characterized in that**, in the event of high starting load, the gear clutch of the lowest gear (G1) of the first input shaft (GE1) and the gear clutch of the reverse stage (R) of the second input shaft (GE2) are closed, and **in that** the rotor (6) of the electric machine (EM) is accelerated backward in the event of a forward start, and forward in the event of a reverse start, in relation to the rotational direction of the propeller shaft (4) of the internal combustion engine (VM).

17. Method according to Claim 15, **characterized in that**, in the event of medium starting load, the gear clutch of the lowest gear (G1) of the first input shaft (GE1) and the gear clutch of the highest gear (G4) of the second input shaft (GE2) are closed, and **in that** the rotor (6) of the electric machine (EM) is accelerated backward in the event of a forward start, and forward in the event of a reverse start, in relation to the rotational direction of the propeller shaft (4) of the internal combustion engine (VM).

18. Method according to Claim 15, **characterized in that**, in the event of low starting load, the gear clutch (S2') of the highest gear (G5) of the first input shaft (GE1) and the gear clutch of the lowest gear (G2) of the second input shaft (GE2) are closed, and **in that** the rotor (6) of the electric machine (EM) is accelerated forward in the event of a forward start, and backward in the event of a reverse start, in relation to the rotational direction of the propeller shaft (4) of the internal combustion engine (VM).

19. Method according to at least one of Claims 14 to 18, **characterized in that**, instead of a gear clutch of the first input shaft (GE1), a brake clutch (B1) assigned to the first input shaft (GE1) is closed, or instead of a gear clutch of the second input shaft (GE2), a brake clutch (B2) assigned to the second input shaft (GE2) is closed.

20. Method according to at least one of Claims 14 to 19, **characterized in that**, when the internal combustion engine (EM) is running, the electric machine (EM) is assisted in terms of drive by the internal combustion engine (VM) by means of an at least partial closure of the separating clutch (K).

21. Method according to at least one of Claims 14 to 20, **characterized in that**, when the internal combustion engine (VM) is in a shut-down state, when a predetermined minimum rotational speed of the internal combustion engine (VM) is reached or exceeded at the first input shaft (GE1), the internal combustion engine (VM) is impulse-started by means of the closure of the separating clutch (K).

22. Method according to at least one of Claims 14 to 21, **characterized in that** a takeover of load by the internal combustion engine (VM) takes place **in that**, when the predetermined rotational speed of the internal combustion engine (VM) is reached by the first input shaft (GE1), the separating clutch (K) is closed, and **in that**, in an overlapping manner in terms of time, the torque of the internal combustion engine (VM) is increased and the torque of the electric machine (EM) is reduced.

23. Method according to at least one of Claims 14 to 22, **characterized in that**, for the stationary support of a torque transmitted via the second input shaft (GE2), a brake clutch (B) assigned to the electric machine (EM) is closed.

24. Method for controlling a hybrid drivetrain according to at least one of Claims 1 to 13, **characterized in that**, for starting by means of the internal combustion engine, after the internal combustion engine (VM) has been started up, in the event of forward starting the gear clutch of the lowest gear (G2) of the second input shaft is closed and in the event of reverse starting the gear clutch of the reverse stage (R) of the second input shaft is closed, **in that** the separating clutch (K) is subsequently closed, and **in that** thereafter, the electric machine (EM) is decelerated in the generator mode with a simultaneous increase in the torque of the internal combustion engine (VM) and in the generative torque of the electric machine (EM) until the electric machine (EM) comes to a standstill.

25. Method according to Claim 24, **characterized in that** the electric machine (EM) is accelerated further in motor operation until synchronous running is attained at the gear clutch of the next highest gear (G3) of the first input shaft (GE1), **in that** the relevant gear clutch of the gear (G3) is then closed, and **in that** subsequently the electric machine (EM) is switched into a powerless state and the gear clutch of the lowest gear (G2) of the second input shaft (GE2) is opened.

26. Method according to at least one of Claims 14 to 25, **characterized in that**, during driving operation under the power of the internal combustion engine, in the event of a gearshift from a load gear (G3) of the first input shaft (GE1) to a target gear (G4) of the second input shaft (GE2), firstly the countershaft (GV2) of the target gear is accelerated by means of the electric machine (EM) until the synchronous rotational speed is reached at the gear clutch of the target gear (G4), **in that** the gear clutch of the target gear (G4) is then closed, and **in that** the support torque of the electric machine (EM) is subsequently increased until the gear clutch of the load gear (G3) can be opened in a load-free manner.

27. Method according to at least one of Claims 14 to 26, **characterized in that**, during driving operation under the power of the internal combustion engine, in the event of a gearshift from a load gear (G4) of the second input shaft (GE2) to a target gear (G3, G5) of the first input shaft (GE1), firstly the countershaft (GE1) of the target gear (G3, G5) is decelerated by means of an increase in the support torque of the electric machine (EM) in the event of an upshift, or is accelerated by means of a reduction in the support torque of the electric machine (EM) in the event of a downshift, until the synchronous rotational speed is reached at the gear clutch of the target gear (G3, G5), **in that** the gear clutch of the target gear (G3, G5) is then closed, and **in that** the electric machine (EM) is then switched into a load-free state and the gear clutch of the load gear (G4) is opened.

**Revendications**

1. Chaîne cinématique hybride d'un véhicule automobile, qui présente un moteur à combustion interne (VM) avec un arbre d'entraînement (4), un moteur électrique (EM) pouvant fonctionner en tant que moteur et en tant que générateur, avec un rotor (6), une boîte de vitesses à commande manuelle à plusieurs étages (7) avec deux arbres d'entrée (GE1, GE2) et un arbre de sortie (GA) ainsi qu'un engrenage différentiel (8), au moins l'un des arbres d'entrée (GE1) pouvant être connecté à l'arbre d'entraînement (4) par le biais d'un embrayage de séparation associé (K), les deux arbres d'entrée (GE1, GE2) pouvant être connectés de manière sélective à l'arbre de sortie (GA) par le biais, en alternance, de jeux de pignons de transmission associés de rapports de multiplication différents et à chaque fois d'un embrayage associé, et l'engrenage différentiel (8) étant réalisé sous forme d'engrenage planétaire simple (9), qui est disposé coaxialement au-dessus du premier arbre d'entrée (GE1), dont la couronne (H) est connectée de manière solidaire en rotation à l'un des arbres d'entrée (GE1), dont le porte satellites (PT) est connecté de manière solidaire en rotation à l'autre arbre d'entrée (GE2), et dont la roue solaire (S) est en liaison d'entraînement avec le rotor (6), **caractérisée en ce que** seulement le premier arbre d'entrée (GE1) connecté de manière solidaire en rotation à la couronne (H) peut être connecté à l'arbre d'entraînement (4) par le biais d'un embrayage de séparation (K), et **en ce que** la boîte de vitesses à commande manuelle (7) est réalisée sous forme de boîte de vitesses intermédiaire avec un agencement emboîté coaxialement des deux arbres d'entrée (GE1, GE2), avec un agencement adjacent coaxial de l'arbre de sortie (GA) et avec deux arbres intermédiaires (VG1, VG2) en liaison d'entraînement à chaque fois par le biais d'une constante d'entrée (EK1, EK2) avec l'un des deux arbres d'entrée (GE1, GE2), les jeux de pignons de transmission de la boîte de vitesses intermédiaire étant disposés en association alternée, à chaque fois sur le premier arbre intermédiaire (VG1) et sur l'arbre de sortie (GA) et sur le deuxième arbre intermédiaire (VG2) et sur l'arbre de sortie (GA).

**2.** Chaîne cinématique hybride selon la revendication 1, **caractérisée en ce que** le moteur électrique (EM) est disposé coaxialement au-dessus du premier arbre d'entrée (GE1), et le rotor (6) du moteur électrique (EM) est connecté de manière solidaire en rotation directement à la roue solaire (S) de l'engrenage planétaire (9).

**3.** Chaîne cinématique hybride selon la revendication 2, **caractérisée en ce que** le moteur électrique (EM) présente un couple maximal ($M_{EM\_max}$), qui correspond au moins à la portion du couple maximal ($M_{VM\_max}$) du moteur à combustion interne (VM) formée par le rapport de multiplication existant ($i_{St}$) de l'engrenage planétaire (9) ($M_{EM\_max}>=1/i_{St} *M_{VM\_max}$).

**4.** Chaîne cinématique hybride selon la revendication 1, **caractérisée en ce que** le moteur électrique (EM') est disposé, avec son axe parallèle, à côté du premier arbre d'entrée (GE1), et le rotor (6) du moteur électrique (EM') est en liaison d'entraînement par le biais d'une constante d'entrée (EK) avec la roue solaire (S) de l'engrenage planétaire (9) avec un rapport de multiplication ($i_{EK}$) supérieur à un ($i_{EK}>1,0$).

**5.** Chaîne cinématique hybride selon la revendication 4, **caractérisée en ce que** le moteur électrique (EM') présente un couple maximal ($M_{EM\_max}$) qui correspond au moins à la portion du couple maximal ($M_{VM\_max}$) du moteur à combustion interne (VM) formée par le produit du rapport de multiplication ($i_{EK}$) de la constante d'entrée (EK) du moteur électrique (EM) et du rapport de multiplication existant ($i_{St}$) de l'engrenage planétaire (9) ($M_{EM\_max}>=1/(i_{EK}*i_{St}) *M_{VM\_max}$).

**6.** Chaîne cinématique hybride selon au moins l'une quelconque des revendications 1 à 5, **caractérisée en ce que** pour le support stationnaire d'un couple transmis, un embrayage de freinage commandable (B) est disposé entre la roue solaire (S) de l'engrenage planétaire (9) ou le rotor (6) du moteur électrique (EM) et un composant (13) fixé à la boîte de vitesses.

**7.** Chaîne cinématique hybride selon au moins l'une quelconque des revendications 1 à 6, **caractérisée en ce que** les jeux de pignons de transmission des vitesses impaires (G1, G3, G5) sont disposés sur le premier arbre intermédiaire (VG1) et sur l'arbre de sortie (GA) et les jeux de pignons de transmission des vitesses paires (G2, G4) et d'un étage de marche arrière (R) sont disposés sur le deuxième arbre intermédiaire (VG2) et sur l'arbre de sortie (GA).

**8.** Chaîne cinématique hybride selon au moins l'une quelconque des revendications 1 à 7, **caractérisée en ce que** les constantes d'entrée (EK1, EK2) des deux arbres intermédiaires (VG1, VG2) présentent à chaque fois un rapport de multiplication ($i_{EK1}$, $i_{EK2}$) supérieur à un ($i_{EK1}>1,0$ ; $i_{EK2}>1,0$).

**9.** Chaîne cinématique hybride selon au moins l'une quelconque des revendications 1 à 8, **caractérisée en ce que** les jeux de pignons de transmission sont à chaque fois formés d'un pignon fixe connecté de manière solidaire en rotation à l'arbre de sortie (GA) et d'un pignon fou monté de manière rotative sur l'arbre intermédiaire associé (VG1, VG2), et **en ce que** les pignons fous peuvent à chaque fois être connectés par le biais d'un embrayage associé à l'arbre intermédiaire associé (VG1, VG2), les embrayages de boîtes de vitesses étant à chaque fois réunis par paires en paquets de commutation communs (S1, S3, S3', S4).

**10.** Chaîne cinématique hybride selon au moins l'une quelconque des revendications 1 à 9, **caractérisée en ce qu'**au moins un jeu de pignons de transmission disposé sur le premier arbre intermédiaire (VG1) et sur l'arbre de sortie (GA) ainsi qu'un jeu de pignons de transmission disposé sur le deuxième arbre intermédiaire (VG2) et sur l'arbre de sortie (GA) sont disposés dans la même position axiale et présentent également un pignon fixe commun (11, 12, 14).

**11.** Chaîne cinématique hybride selon au moins l'une quelconque des revendications 1 à 10, **caractérisée en ce qu'**un embrayage direct (S2') est disposé entre l'un des deux arbres d'entrée (GE1, GE2) et l'arbre de sortie (GA).

**12.** Chaîne cinématique hybride selon au moins l'une quelconque des revendications 1 à 11, **caractérisée en ce que** pour le support d'un couple transmis par le biais de l'autre arbre d'entrée respectif (GE1, GE2) sur les deux arbres intermédiaires (VG1, VG2), un embrayage de freinage commandable (B1, B2) est à chaque fois disposé de manière à être connecté à un composant (13) fixé à la boîte de vitesses.

**13.** Chaîne cinématique hybride selon la revendication 12, **caractérisée en ce que** les embrayages de freinage (B1, B2) sont construits et disposés de manière identique aux embrayages de boîte de vitesses et sont incorporés par une technique de commande dans l'actionnement des embrayages de boîte de vitesses.

**14.** Procédé de commande d'une chaîne cinématique hybride selon au moins l'une quelconque des revendications 1 à 13, **caractérisé en ce que** pour le démarrage par le biais du moteur électrique, l'embrayage de séparation (K) est ouvert, **en ce qu'**un embrayage d'une vitesse associée au premier arbre d'entrée (GE1) et un embrayage d'une vitesse associée au deuxième arbre d'entrée (GE2) sont fermés, **en ce qu'**ensuite, le rotor (6) du moteur électrique (EM) est accéléré en mode moteur.

**15.** Procédé selon la revendication 14, **caractérisé en ce que** la sélection des deux vitesses à enclencher s'effectue en fonction de la charge au démarrage.

**16.** Procédé selon la revendication 15, **caractérisé en ce que** dans le cas d'une charge au démarrage élevée, l'embrayage de la plus petite vitesse (G1) du premier arbre d'entrée (GE1) et l'embrayage de l'étage de marche arrière (R) du deuxième arbre d'entrée (GE2) sont fermés, et **en ce que** le rotor (6) du moteur électrique (EM) est accéléré, par rapport au sens de rotation de l'arbre d'entraînement (4) du moteur à combustion interne (VM), vers l'arrière dans le cas d'un démarrage en marche avant et vers l'avant dans le cas d'un démarrage en marche arrière.

**17.** Procédé selon la revendication 15, **caractérisé en ce que** dans le cas d'une charge au démarrage moyenne, l'embrayage de la plus petite vitesse (G1) du premier arbre d'entrée (GE1) et l'embrayage de la plus grande vitesse (G4) du deuxième arbre d'entrée (GE2) sont fermés, et **en ce que** le rotor (6) du moteur électrique (EM) est accéléré, par rapport au sens de rotation de l'arbre d'entraînement (4) du moteur à combustion interne (VM), vers l'arrière dans le cas d'un démarrage en marche avant et vers l'avant dans le cas d'un démarrage en marche arrière.

**18.** Procédé selon la revendication 15, **caractérisé en ce que** dans le cas d'une faible charge au démarrage, l'embrayage (S2') de la plus grande vitesse (G5) du premier arbre d'entrée (GE1) et l'embrayage de la plus petite vitesse (G2) du deuxième arbre d'entrée (GE2) sont fermés, et **en ce que** le rotor (6) du moteur électrique (EM) est accéléré, par rapport au sens de rotation de l'arbre d'entraînement (4) du moteur à combustion interne (VM), vers l'avant dans le cas d'un démarrage en marche avant et vers l'arrière dans le cas d'un démarrage en marche arrière.

**19.** Procédé selon au moins l'une quelconque des revendications 14 à 18, **caractérisé en ce qu'**au lieu d'un embrayage du premier arbre d'entrée (GE1), un embrayage de freinage (B1) associé au premier arbre d'entrée (GE1) est fermé, ou au lieu d'un embrayage de boîte de vitesse du deuxième arbre d'entrée (GE2), un embrayage de freinage (B2) associé au deuxième arbre d'entrée (GE2) est fermé.

**20.** Procédé selon au moins l'une quelconque des revendications 14 à 19, **caractérisé en ce que** le moteur électrique (EM), lorsque le moteur à combustion interne (VM) tourne, est supporté par une technique d'entraînement par une fermeture au moins partielle de l'embrayage de séparation (K) du moteur à combustion interne (VM).

**21.** Procédé selon au moins l'une quelconque des revendications 14 à 20, **caractérisé en ce que** lorsque le moteur à combustion interne (VM) est coupé, une fois qu'un régime minimal prédéterminé du moteur à combustion interne (VM) sur le premier arbre d'entrée (GE1) est atteint ou dépassé, le moteur à combustion interne (VM) est démarré par impulsions par la fermeture de l'embrayage de séparation (K).

**22.** Procédé selon au moins l'une quelconque des revendications 14 à 21, **caractérisé en ce que** le moteur à combustion interne (VM) reprend la charge par le fait que l'embrayage de séparation (K) est fermé une fois le régime prédéterminé du moteur à combustion (VM) atteint par le biais du premier arbre d'entrée (GE1), et **en ce que**, de manière enchaînée dans le temps, le couple du moteur à combustion interne (VM) est augmenté et le couple du moteur électrique (EM) est réduit.

**23.** Procédé selon au moins l'une quelconque des revendications 14 à 22, **caractérisé en ce que** pour le support stationnaire d'un couple transmis par le biais du deuxième arbre d'entrée (GE2), un embrayage de freinage (B) associé au moteur électrique (EM) est fermé.

**24.** Procédé de commande d'une chaîne cinématique hybride selon au moins l'une quelconque des revendications 1 à 13, **caractérisé en ce que** pour le démarrage par le moteur à combustion interne après l'allumage du moteur à combustion interne (VM), dans la cas d'un démarrage en marche avant, l'embrayage de la plus petite vitesse (G2) du deuxième arbre d'entrée est fermé, et dans le cas d'un démarrage en marche arrière, l'embrayage de boîte de vitesse de l'étage de marche arrière (R) du deuxième arbre d'entrée est fermé, **en ce qu'**ensuite, l'embrayage de séparation (K) est fermé, et **en ce qu'**ensuite le moteur électrique (EM) en mode de générateur est ralenti tout en augmentant simultanément le couple du moteur à combustion interne (VM) et le couple générateur du moteur électrique (EM) jusqu'à l'arrêt du moteur électrique (EM).

25. Procédé selon la revendication 24, **caractérisé en ce que** le moteur électrique (EM) est en outre accéléré en mode moteur, jusqu'à ce qu'un fonctionnement synchrone soit obtenu au niveau de l'embrayage de la vitesse en dessous de la vitesse maximale (G3) du premier arbre d'entrée (GE1), **en ce qu'**ensuite l'embrayage concerné de la vitesse (G3) est fermé, et **en ce qu'**ensuite le moteur électrique (EM) est commuté sans force et l'embrayage de la plus petite vitesse (G2) du deuxième arbre d'entrée (GE2) est ouvert.

26. Procédé selon au moins l'une quelconque des revendications 14 à 25, **caractérisé en ce que** dans le mode de conduite par moteur à combustion interne, en cas de changement de vitesse d'une vitesse en charge (G3) du premier arbre d'entrée (GE1) à une vitesse cible (G4) du deuxième arbre d'entrée (GE2), l'arbre intermédiaire (GV2) de la vitesse cible est d'abord accéléré au moyen du moteur électrique (EM) jusqu'à atteindre le régime synchrone sur l'embrayage de la vitesse cible (G4), **en ce qu'**ensuite l'embrayage de la vitesse cible (G4) est fermé, et **en ce qu'**ensuite le couple de support du moteur électrique (EM) est augmenté jusqu'à ce que l'embrayage de la vitesse en charge (G3) puisse être ouvert sans charge.

27. Procédé selon au moins l'une quelconque des revendications 14 à 26, **caractérisé en ce que** dans le mode de conduite par moteur à combustion interne, dans le cas d'un changement de vitesse d'une vitesse en charge (G4) du deuxième arbre d'entrée (GE2), à une vitesse cible (G3, G5) du premier arbre d'entrée (GE1), l'arbre intermédiaire (GE1) de la vitesse cible (G3, G5) est d'abord ralenti jusqu'à l'obtention du régime synchrone sur l'embrayage de la vitesse cible (G3, G5) dans le cas d'un passage à une vitesse supérieure par une augmentation du couple de support du moteur électrique (EM), et dans le cas d'un rétrogradage, est accéléré par une réduction du couple de support du moteur électrique (EM), **en ce qu'**ensuite l'embrayage de la vitesse cible (G3, G5) est fermé, et **en ce qu'**ensuite le moteur électrique (EM) est commuté sans charge et l'embrayage de la vitesse en charge (G4) est ouvert.

Fig. 1

Fig. 2

EP 2 089 639 B1

Fig. 3

Fig. 4

Fig. 5

R
S4 G6
G6 S4
G4 G6
G4 G2
EK2 VG2
PT 7'
EM 5
6
GE1
4
110KW
25Nm
+/-3000upm
100KW
200Nm (1000upm)
320Nm (3000upm)
VM
K
S
P
2.1
-1,6
0,6
1,0
1,8
1,75
3,0
10
S3
GA
11
12
S1
VG1
G1 G3
1,0
G5 S2'
1,8
H
8,9
GE2 EK1
1,75
1,0

Fig. 6

GE1 · VM · K · S · P · 2.1 · EM · PT · H · GE2 · EK1 · G5 · S2' · G1 · G3 · EK2 · VG2 · G2 · G4 · G6 · S4 · R · S3 · GA · S1 · VG1

EP 2 089 639 B1

28

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19849156 A1

- EP 0845618 B1